# EUROPEAN PATENT SPECIFICATION

(11) **EP 3 754 498 B1**
(45) Date of publication and mention of the grant of the patent: **22.11.2023**
(21) Application number: 20164028.1
(22) Date of filing: 18.03.2020
(51) Int. Cl.: G06F 9/50

(54) **ARCHITECTURE FOR OFFLOAD OF LINKED WORK ASSIGNMENTS**
ARCHITEKTUR ZUM ABLADEN VON VERKNÜPFTEN ARBEITSZUWEISUNGEN
ARCHITECTURE DE DÉLESTAGE D'ATTRIBUTIONS DE TRAVAIL LIÉES

(30) Priority: 21.06.2019 US 201916448860
(43) Date of publication of application: 23.12.2020
(73) Proprietor: Intel Corporation, Santa Clara, CA 95054 (US)
(72) Inventor: BACHMUTSKY, Alexander, Sunnyvale, CA (US); HERDRICH, Andrew, Hillsboro, OR 97124 (US); CONNOR, Partick, Beaverton, OR 97007 (US); KONDAPALLI, Ranghu, San Jose, CA 95121 (US); GUIM BERNAT, Francesc, Barcelona (ES); DUBAL, Scott P., Oregon City, OR 97045 (US); HEARN, James, Hillsboro Oregon 97124 (US); SOOD, Kapil, Portland, OR 97229 (US); MCDONNELL, Niall, Limerick LK, V94 TK5W (IE); ADILETTA, Matthew, Bolton, MA 01740 (US)
(74) Representative: 2SPL Patentanwälte PartG mbB

(56) References cited:
- US-A1- 2018 095 750

## Description

### TECHNICAL FIELD

Various examples described herein relate to workflow management and scheduling.

### BACKGROUND

Core-to-core ("C2C") communication is critical in many computer applications today such as packet processing, high-performance computing, machine learning, and data center/cloud workloads. C2C communication can be used in the process of performing some type of compute or data processing operation. In chip multi-processor ("CMP") architectures, as the number of cores increases, C2C communication often becomes a limiting factor for performance scaling when workloads share data. On a general purpose platform, shared memory space between cores is often employed to realize efficient C2C communication. However, the need to carefully manage the shared memory space by software, together with the increase in sensitivity to the performance of hardware coherency traffic, tend to incur significant overhead. As a result, software may observe that CPU cores and network-on-chip ("NoC") designs that share coherent caches may be hindered in performance by data sharing and coherency traffic driving higher effective latencies to complete an operation and higher bandwidth utilization levels. This keeps CPU cores and NoCs from performing their intended data processing tasks as effectively as might otherwise be possible.

US 2018/095750 discloses that certain embodiments provide for device-to-device chaining between devices because the communication channel between devices is defined. US 2018/095750 discloses that the information transmitted across this channel identifies the availability of data to work on in a predefined manner and/or a context pointer that identifies the job type information to the other device. The context pointer may point to the control and/or configuration information for the job specific operation to be performed on a specific device. This context pointer may be provided during initialization by the processor (e.g., CPU) along with channel information and setup for communication between devices.

### BRIEF DESCRIPTION OF THE DRAWINGS

FIG. 1A is a diagram showing an exemplary system utilizing a queue management device in accordance with some embodiments.
FIG. 1B depicts a high level block diagram of a work scheduler in accordance with some embodiments.
FIG. 2 depicts examples of queue entry formats in accordance with some embodiments.
FIG. 3 depicts an example of a work scheduler for processing linked workloads using multiple accelerators in accordance with some embodiments.
FIG. 4 depicts an example of trust clusters that depicts different levels of trust and trust groupings in accordance with some embodiments.
FIG. 5 shows an example of a multiple processing steps using a chained descriptor format in accordance with some embodiments.
FIG. 6 depicts an example sequence whereby pre-work and post-work for each accelerator work descriptor is performed to prepare an accelerator in a sequence to properly execute a command in accordance with some embodiments.
FIG. 7 depicts an example universal work descriptor format in accordance with some embodiments.
FIG. 8A depicts an example process for use by an application to request a workflow execution by a work scheduler in accordance with some embodiments.
FIG. 8B depicts an example process for use by a work scheduler to perform a string of work units in a workflow in accordance with some embodiments.
FIG. 8C depicts a process that can be performed by an accelerator.
FIG. 9 depicts a system in accordance with some embodiments.
FIG. 10 depicts a network interface that can use embodiments or be used by embodiments.
FIG. 11 depicts a switch in accordance with some embodiments.
FIG. 12 depicts an example of a data center in accordance with some embodiments.

### DETAILED DESCRIPTION

Currently, it is very complex to migrate services across nodes, including for instance in virtualized environments, at least because of transport address change issues (too many entities to re-configure, and so forth) or to re-direct or re-balance services because of failures, capacity changes or load changes. In addition, hardware modules (e.g., network interfaces, accelerators, and other hardware devices) frequently cannot communicate directly to one another. Instead, hardware modules use cores that execute software as an intermediary. Extra pre-processing and/or post-processing is required by the cores for many implementations, including quality of service (QoS), load balancing, flow handling, optimized delivery of known flows or to known destinations. In addition, core interactions for flow handling is required, which increases latency and limits accelerator performance. Use of a core, while highly flexible, expends energy and introduces latency in availability of data relative to what an accelerator might be able to provide. Also, overhead and latency of data copy and pointer translation is incurred by the core. These factors can limit the benefits of service chaining and limit the value of accelerator integration.

There are many different software and hardware communication application program interfaces (APIs) (e.g., socket, VirtIO, SR-IOV, SIOV, DPDK, memif, pub-sub (Kafka, RabbitMQ, AMQP), RPC (gRPC), and many more). Communication between hardware modules are either pre-developed for a particular path or non-existent. Software communication with hardware is generally very much device-specific and requires deployment, support and knowledge of various drivers and mostly device-specific APIs and data formats. Because of these device-specific interfaces, when multiple hardware devices are to process a given dataset (e.g., packet, image block, video, audio, and input machine learning inference data), when performing a series of offloaded sequential tasks, communication generally flows from operating system (OS) software to a first device, then back to software, where it is then passed to a subsequent hardware device (e.g. accelerator device such as a crypto engine, inference engine, network controller, and so forth). Each of the hand-offs from hardware to software to hardware again requires interrupts, interrupt service routines (ISRs), Memory-mapped I/O (MMIO) transactions, creation of proprietary task items (e.g., descriptors), and submission to the work queue. Alternate flows may include user-space software interfacing with devices, or polling of device interfaces, but the effect is the same in that this consumes CPU cycles. This consumes central processing unit (CPU) cycles and adds processing latency even when all of the required processing is known at the start of the processing chain. On top of that, many communication schemes involve packetization and communication channel specific header overheads.

Various embodiments provide an architecture which enables accelerator chaining such that cores can construct arrays/lists of accelerator work items which may be submitted once to a work scheduler, without cores overseeing progress through the chain and receiving an update when the sequence of work has completed. The software running on a core sets up all operations in a sequence of work and pre-arranges data transfer(s). For example, software (e.g., an application or kernel level software running (or virtual machine manager (VMM))) on a core can send a data pointer to a port of a work scheduler. The pointer can refer to a start of an array of steps.

Various embodiments provide a simplified software development model utilizing a single universal API and device linking by offloading to a work scheduler some load balancing, flow-specific communication (including quality of service (QoS)) for a linked workflow. Some embodiments can be used with a virtualization-friendly simplified device interfaces (such as VirtIO). Various embodiments permit a potential of creating a single large processing cluster spread across many cores and servers with universal and optimized deployment and run-time communication, with capability for QoS-based hardware and software slicing across different tenants, applications, services, and so forth. Using these techniques, the software that requests linked operations do not need to know where accelerators exist or manage execution and the accelerators do not need to know that other accelerators exist.

Various embodiments can be used on a system that is implementing Scalable I/O Virtualization (SIOV). SIOV allows scalable sharing of I/O devices, such as network controllers, storage controllers, graphics processing units, and other hardware accelerators across a large number of containers or virtual machines.

A universal API can abstract locality of accelerators whereby applications and accelerators are not aware of the next hop location, it can be on the same or different core, NUMA node, server, or rack. In the extreme case the task could even move between the datacenters or to/from edge servers (e.g., Fog or edge network). Service linking across cores and onload accelerators with service chaining (task hand-off) across hardware devices (accelerators) can occur without CPU involvement.

A work scheduler can provide QoS across cores (e.g., tenant, VMs, containers, or applications) and accelerator devices can enable hardware resource usage service level agreement (SLA) or similar policy enforcement (e.g., tenant or application may use only X% of a particular accelerator's time). Accelerator QoS aware reuse or sharing can be provided to remove or reduce a need to replicate encryption or data mover in every hardware device and chain a single one into the processing chain. QoS aware load balancing can be provided across software and hardware instances.

Analytics for communications within a system on chip (SoC) can be provided whereby queue statistics can be collected from a work scheduler to provide information about communications. The analytics may take the form for example of performance monitoring statistics from the hardware device comprising for instance work units processed per unit time, number of work units dispatched or waiting, average service time by each accelerator or software executed by a device, completions outstanding, credit management statistics, and so forth. If the work scheduler uses timestamps to track when data processing deadlines are due to be met (for stages or for the whole work unit), this can also influence how work items are prioritized (internal quality of service). Work requests (e.g., via combined work descriptor) can be used to determine application behavior (e.g., what, when, why) and predict application behavior to inform expected resource and input/output utilization.

To avoid cache pollution waiting for application readiness, a just-in-time cache can be used to bring data into the cache not when a message (represented, for example, by queue entry, combined work descriptor, or work descriptor) is sent, but when the message has been read. Work scheduler can provide a right amount of content in a cache for the core, accelerator, application, and so forth to consume at the right time. Less memory or cache can be used because less data is placed into cache for communication between servers or less data is evicted from the cache as a result of more precise timing to access the data. Work scheduler can also include a cache that can be used to receive first N bytes of data that is pushed to core, accelerator, or application's cache.

Intra-server communications can use data inline modification or transformation operations whereby packetization, size tailoring, data processing are applied for Internet Protocol (IP) routing or layer 2 (L2) switching. Communications with work scheduler can be performed at L7 with no routing, switching, no layer 2 or layer 3 (L2/L3) processing and data is passed as-is, with no other overhead, header or Data Plane Development Kit (DPDK) pointer pass.

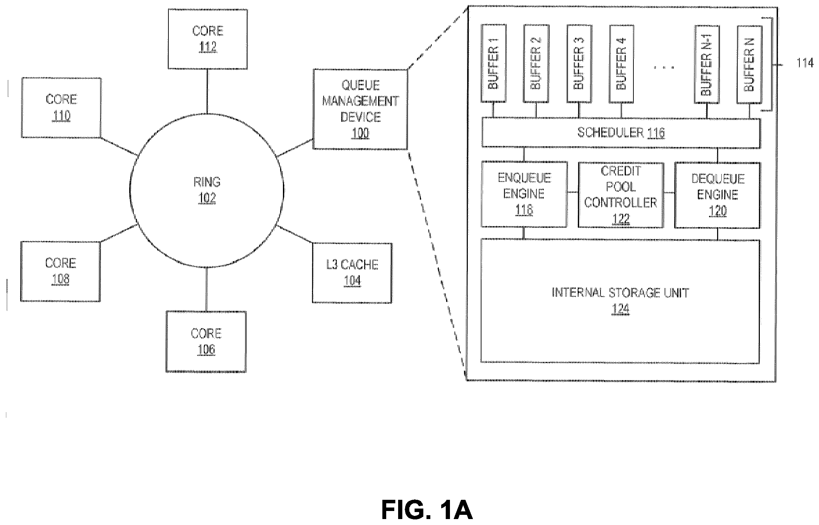

FIG. 1A is a schematic diagram showing an exemplary system utilizing a queue management device (QMD) (also referred to as a "work scheduler") according to an embodiment. QMD 100 can be attached to any or a combination of a high-speed or network-on-chip ("NoC") interconnect, a network, mesh, or a bus. Ring (interconnect) 102 is shown in the figure as this interconnect but other network formations, such as a mesh or network-on-chip may be also used. Any intermediate protocol-conversion block can be used between ring 102 and the QMD 100. The high-speed interconnect connects the CPU cores 106-112 and L3 cache 104 with the QMD 100. Although not illustrated in the diagram, there may be additional CPU cores, L3 caches, and/or other devices connected to the high-speed interconnect. The connection between the CPU cores 106-112, L3 cache 104, and QMD 100 may be a special dedicated interconnect or an existing shared interconnect. In other examples, other hardware devices can be coupled to ring 102 such as accelerators, network interfaces, storage, memory pools. Enqueue and dequeue requests sent out by the CPU cores will be routed to the QMD. In one embodiment where acknowledgement is required, the QMD would send a response back to the requesting core after each successful enqueue or dequeue operation to acknowledge the completion of the request. In another embodiment, where acknowledgement is not required, a path between the requesting core and the QMD allows a request to be submitted without returning an acknowledgement back to the requesting core, so long sufficient request resources are provided or reserved. Also shown in FIG. 1A are various components of the QMD 100. The QMD 100 comprises one or more buffers (collectively labeled as 114), a scheduler 116, an enqueue engine 118, a dequeue engine 120, a credit pool controller 122, and an internal storage unit 124.

Enqueue and dequeue requests sent from the requesting CPU cores is first received and stored by the QMD 100 into one of the buffers 114. The buffers 114 temporarily store the incoming requests as the QMD 100 may not have enough resources or bandwidth to serve all the incoming requests at the moment they are received. In some embodiments, the buffers are first in first out (FIFO) queues where the first request into the buffer will be the first request out of the buffer. In one embodiment, a subset of buffers is allocated to store only enqueue requests while another subset is reserved for only dequeue requests. Other ways for allocating the buffers, such as by core, by thread, by request type, by priority, service level agreement, etc., may also be used. A single priority level may be assigned across all the buffers to simplify implementation and to maximize throughput. Alternatively, multiple priority level may be implemented to support finegrained Quality of Service (QoS) features. For example, given n priorities, every enqueue and dequeue buffer pair may be assigned a different priority such that n buffers are allocated for enqueue requests and n buffers are allocated for dequeue requests. Each incoming request has a priority that is either pre-assigned by the requesting core/thread or assigned by the QMD upon receipt by the QMD. Each request is then stored in a buffer that corresponds to the request's priority (1-n) and/or type (enqueue or dequeue) and/or other parameters.

Scheduler 116 chooses a buffer and selects one or more requests from the head of buffer. The buffer is chosen according to a scheduling policy. Various scheduling policies, such as Round Robin, Weighted Round Robin, preemptive priority, and a combination of these and other policies may be implemented. In a Round Robin policy, for example, the buffers are simply chosen sequentially, i.e. lowest buffer ID to the highest, or vice versa. If a chosen buffer is empty, scheduler 116 selects from a different buffer. In some embodiments, scheduler 116 is aware of empty buffers and may skip a selection of such buffers to improve performance. In a Weighted Round Robin policy, scheduler 116 chooses and serves each buffer sequentially based on their associated priority. The ability to control the order in which to serve the buffers is called requestlevel flow control. After choosing a buffer and selecting one or more requests from the head of the chosen buffer, the scheduler 116 schedules each selected requests for execution by either the enqueue engine 118 or the dequeue engine 120 according to the request type.

The enqueue engine circuit 118 and dequeue engine circuit 120 read and write to the QMD's internal storage unit 124 through dedicated ports. An enqueue request executed by the enqueue engine 118 causes one data item to be inserted into the internal storage unit 124. A dequeue request executed by the dequeue engine 120 causes one data item to be retrieved from the internal storage unit 124 and sent to the output queue. If a request cannot be executed by the enqueue or dequeue engine, it may be inserted back to the tail of the buffer to be processed later. This reduces the chances of deadlocking a requesting core or device

The internal storage unit 124 is used for storing queues and queue entries. It may be comprised of Static Random Access Memory ("SRAM"), Dynamic Random Access Memory ("DRAM"), or any other suitable memory technology. The internal storage unit 124 is configurable to support any number of queues as well as different queue sizes.

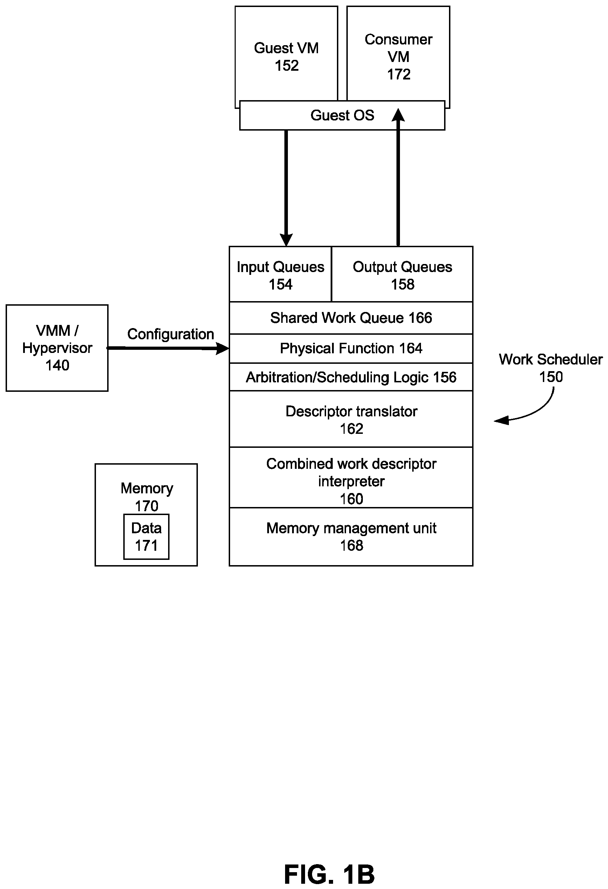

FIG. 1B depicts a high level block diagram of a work scheduler. While FIG. 1B shows software instances submitting entries to a work scheduler, an accelerator or any other hardware block can submit such entries. In some examples, work scheduler 150 can be used in a single root input/output virtualization (SR-IOV) or Scalable I/O Virtualization (SIOV) virtual machine (VM)-enabled example usage. SR-IOV is compatible at least with specifications available from Peripheral Component Interconnect Special Interest Group (PCI SIG) including specifications such as Single Root I/O Virtualization and Sharing specification Revision 1.1 (2010) and variations thereof and updates thereto. SIOV provides for scalable sharing of I/O devices, such as network controllers, storage controllers, graphics processing units, and other hardware accelerators across a large number of containers or virtual machines. A technical specification for SIOV is Intel^{®} Scalable I/O Virtualization Technical Specification, revision 1.0, June 2018.

SR-IOV is a specification that allows a single physical PCI Express (PCIe) resource to be shared among virtual machines (VMs) using a single PCI Express hardware interface.

A virtual machine (VM) can be software that runs an operating system and one or more applications. The virtual machine is defined by specification, configuration files, virtual disk file, NVRAM setting file, and the log file and is backed by the physical resources of a host computing platform.

A virtual machine manager (VMM) or hypervisor 140 can configure work scheduler for execution. For example, virtual machine manager (VMM) or hypervisor 140 can provide various configurations such as quality of service policies for a queue entry issued by cores or applications, quality of service policies for use of accelerators or consuming threads, schemes for format translations or semantic translations for work descriptors into descriptors or instructions for a particular accelerator or thread, access control policies enabling, disabling, or limiting use of the QMD from a particular core or application or accelerator, to a particular core or application or accelerator, between a particular pair of cores or applications or accelerators. In some embodiments, limiting use of the QMD can include one or more of: time limiting, load limiting, rate limiting, throughput limiting and other usage restrictions. VMM or hypervisor 140 can configure work scheduler in at least queue connectivity (e.g., which input queues are routed to which output queues), whether load balancing is enabled, which queues should be given to the software applications, or VMs, and so forth.

Producer 152 can submit queue entries (QEs) to work scheduler 150 through device writes into the input queues 154 via for example using memory-mapped I/O (MMIO) writes or MOVDIR64B instructions for example. For QE submissions, at least fused enqueue or CLDEMOTE instructions can be used. Fused enqueue can be a form of instruction by which work can be submitted and the corresponding underlying data sent using CLDEMOTE at the same time, saving time and instruction bandwidth. Producer 152 can provide a universal or combined work descriptor to work scheduler 150 for execution of one or more work descriptors. In other examples, producer 152 represents a thread executed by a VM or accelerator that performed a work descriptor and is indicating completion of a work descriptor or provides a link to a next work descriptor to input queues 154 for execution by a thread or accelerator.

Work scheduler 150 may support varying queue entry sizes, for instance, to support multiple 64 bit pointers packed into a large 64 byte queue entry. These differing formats can allow a descriptor to point to multiple units of work, perhaps to be completed by cores or specific hardware accelerator devices. A hardware accelerator device can be any non-core compute entity coupled to the work scheduler or a platform that is connected to the work scheduler via interconnects or fabrics such as Intel QuickPath Interconnect (QPI), Intel Ultra Path Interconnect (UPI), Intel On-Chip System Fabric (IOSF), Omnipath, Ethernet, Compute Express Link (CXL), HyperTransport, high-speed fabric, PCIe, NVLink, Advanced Microcontroller Bus Architecture (AMBA) interconnect, OpenCAPI, GenZ, CCIX, and so forth. Work scheduler 150 can be communicatively coupled to one or more other devices such as a core and accelerators via any interconnects or fabrics.

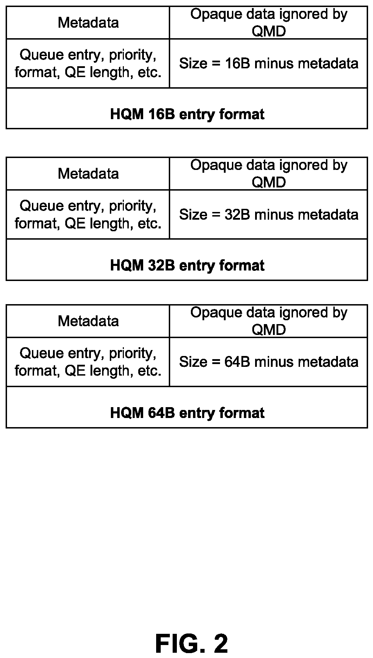

Arbitration and scheduler logic 156 can determine which queue entry to provide for execution by an accelerator device specified by a queue entry. Examples of queue entry formats are described herein, for example, with respect to FIG. 2. Arbitration and scheduler logic 156 can support quality of service across cores that request work performance and across one or more accelerator devices. For example, arbitration and scheduler logic 156 can enable service level agreement (SLA) or similar policy enforcement (e.g., tenant or application may use only X% of a particular accelerator's time). Arbitration and scheduler logic 156 can allocate QEs to output queues 158 for execution by an accelerator or consuming thread in a VM.

Combined work descriptor interpreter 160 can interpret a universal work descriptor provided via a QE or other input port and retrieve or generate at least one work descriptor for processing by a target thread or accelerator. Various examples of a universal work descriptor are described herein. A universal work descriptor can refer to one or more linked work descriptors that are to be performed by one or more threads or accelerators. In some examples, a universal work descriptor can refer to a first work descriptor that is to be performed by a thread or accelerator using a pointer for example. The first work descriptor can refer to a second work descriptor that is to be performed after the first work descriptor is executed. In some examples, a core (not depicted) can issue a universal work descriptor to work scheduler 150 and the core is not involved in managing execution of linked work descriptors referenced by the universal work descriptor.

Descriptor translator 162 can be used to translate an individual work descriptor for a thread into a format that can be properly executed or is accepted by a target thread or accelerator. Descriptor translator 162 can be used to translate QEs from input queue 154 prior to storage in output queues 158. Descriptor translator 162 can translate QEs or instructions in output queues 158 prior to issuance or fetching by a target thread or accelerator. In some embodiments, translation can include format translation, alignment translation, pointer translation across various virtual memory spaces, and more. A thread can be any software that is executed by a computer (including executables, binaries, libraries, or any code). Multiple processes can be executed within a VM or container. A container can be a software package of applications, configurations and dependencies so the applications run reliably on one computing environment to another. Containers can share an operating system installed on the server platform and run as isolated processes.

Work scheduler 150 can translate workflow instruction for multiple work portions (e.g., APIs, commands or descriptors) from an application to a format that is properly executed by an accelerator. For example, work scheduler can adjust a size of an instruction to be a form accepted by an accelerator. If an accelerator accepts 24 bit instructions and a received instruction is 20 bits, 4 bits can be added as padding. If an order of variables or fields provided with an instruction are different than that required by an accelerator, work scheduler can reorder the fields to be in a format required and recognized by accelerator for proper operation. Other instruction translation techniques can be used. Translation techniques can be programmed based on updated or revised formats accepted by an accelerator. Work scheduler 150 can include a processor or micro engine that runs device drivers for accelerators. In some cases, an accelerator can accept a format of a workflow instruction from an application, work scheduler does not perform a translation of a format of an instruction.

Note that in some examples, either any or both of work scheduler and a target accelerator can perform translation and transformation of a descriptor. For example, if a target accelerator accesses a universal or combined work descriptor, the target accelerator can translate the universal or combined work descriptor into a format or a work descriptor properly executed by the target accelerator.

Physical function 164 can be the base location in the PCI device hierarchy where the work scheduler is enumerated, and associated memory-mapped base address registers (BARs) and can be used for baseline configuration of the work scheduler and work scheduler resets.

Shared work queue 166 can be a memory-mapped queue into which Process Address Space ID (PASID)-tagged work descriptors can be submitted for Virtual Function[N] or SIOV.

Memory management unit (MMU) 168 can translate virtual memory addresses to physical memory addresses. For example, if work scheduler 150 and a core that issued a universal work descriptor or an accelerator that is to process data do not share virtual memory space but have access to shared physical memory space, MMU 168 can be used for pointer translation to physical memory address in memory 170.

Consumer 172 can be a thread executed by a VM or an accelerator (or any other software or hardware module) that is to perform work specified by a work descriptor in output queues 158. As stated earlier, a format of the work descriptor can be translated prior to execution by consumer 172. Consumer 172 can read work descriptors from output queues 158. In some examples, consumer 172 can use fused dequeue and prefetch. Consumer 172 can execute work operations on data 171 stored in memory 170. After execution of work referenced in a work descriptor, consumer 172 can indicate completion via input queues 154.

FIG. 2 depicts various queue entry formats illustrating a flexible queue entry format for supporting queue entries of different lengths and sizes. Although queue entries of sizes 16 bytes through 64 bytes are shown, other queue entry sizes may be used as well. Each queue entry includes two parts, namely, metadata and opaque data. Metadata contains information relating to the queue entry itself, such as queue ID, priority, format, and length. Information contained in each queue entry's metadata is used by the work scheduler to perform enqueue and dequeue related operations on that entry. In some embodiments, metadata can also contain a limited amount of information from the opaque data portion (such as headers, for example) to optimize access to the most frequently used information. The opaque data portion contains the actual data, or pointers to actual data, to be shared with consumer core, thread, device, and so forth via a dequeue request. The opaque data portion can be ignored and untouched by the work scheduler.

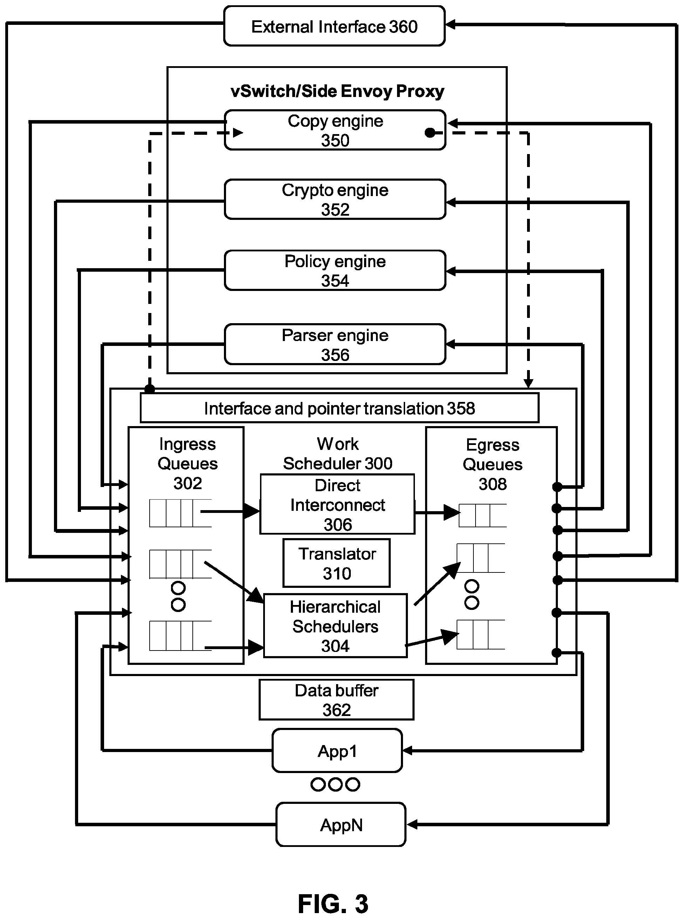

FIG. 3 depicts an example of a work scheduler for processing linked workloads using multiple applications and accelerators. Elements of work scheduler 300 can be implemented in a single integrated circuit or connected using an interconnect or network (e.g., Intel QuickPath Interconnect (QPI), Intel Ultra Path Interconnect (UPI), Intel On-Chip System Fabric (IOSF), Omnipath, Ethernet, Compute Express Link (CXL), HyperTransport, high-speed fabric, PCIe, NVLink, Advanced Microcontroller Bus Architecture (AMBA) interconnect, OpenCAPI, GenZ, CCIX, and so forth). Work scheduler 300 can be programmed to manage workflow of linked operations. In some examples, various processors (e.g., hardware elements and accelerators) are available for use in linked or chained operations by work scheduler 300. In this example, work scheduler 300 is linked to various applications App1 to AppN and accelerator devices, such as copy engine 350 (e.g., data movers/DMA-offload), crypto engine 352 (e.g., encryption or decryption), policy enforcement engine 354, and parser engine 356 via interconnects, a mesh, or a fabric. Accelerators can include field programmable gate arrays (FPGAs), graphics processor units (GPUs), artificial intelligence (AI) inference engines (e.g., image recognition, object detection, speech recognition), memory, storage, central processing units (CPUs), and so forth. For example, an accelerator can use a neural network, processors, and memory. Accelerators can include a single or multi-core processors, graphics processing units, general purpose graphics processing units, logical execution unit single or multi-level cache, functional units usable to independently execute programs or threads, application specific integrated circuits (ASICs), neural network processors (NNPs), programmable control logic, and programmable processing elements such as FPGAs. A neural network can be embodied as a separate neural network device use any components of processors. Multiple neural networks, processor cores, or graphics processing units can be made available for use by AI or ML models. For example, the AI model can use or include any or a combination of: a reinforcement learning scheme, Q-learning scheme, deep-Q learning, or Asynchronous Advantage Actor-Critic (A3C), combinatorial neural network, recurrent combinatorial neural network, or other AI or ML model. Multiple neural networks, processor cores, or graphics processing units can be made available for use by AI or ML models. For example, the example can apply to networking for a virtual switch (e.g., Open vSwitch) for virtual machines (VMs) or Side Router/Envoy (for containers).

Examples of provisioning of work scheduler 300 are described next. Under the direction of the operation system, virtual machine manager (VMM) or orchestration software, a control plane software connects work scheduler 300 to control software and permits programming of a workflow descriptor, template or script. Control plane software can run on a server that includes work scheduler 300 or a remote core in a separate rack, chassis, server, or data center from that which includes work scheduler 300. In some examples, a script or workflow (e.g., combined work descriptor (CWD)) can be specified for any packet received on a particular port or associated with a particular flow or having specific packet characteristics. There could be multiple ways to configure the work scheduler. Out-of-band configuration can be used when the work scheduler has dedicated configuration port that can be accessed only by an authorized (and optionally authenticated) entity as represented by VMM or hypervisor 140. Configuration can be done using in-band configuration, when an authorized entity enqueues a special work entry into the work scheduler (e.g., using a dedicated queue for control) that is interpreted by the work scheduler as a configuration command.

For a service chain of one or more operations to be performed using one or more applications and/or accelerators, hardware logic or software executing on a core can create a combined work descriptor (CWD) that specifies a sequence of software modules and/or hardware devices that are to perform operations on data. In some embodiments, a CWD can be attached to every work request. In some embodiments, CWD can be created a-priori by an application or a control/management entity as a template for linked accelerators or applications. In such embodiments, the CWD can be either explicitly referred to in every work request using a template CWD ID, or the work scheduler 300 can be configured to implicitly derive template CWD ID from other parameters, such as work requestor, input queue ID, etc. Work scheduler 300 generates one or more work requests from a received CWD. A work request can be a request to process data, store data, transfer data, copy data, and so forth. Work scheduler 300 can perform management of data processing and placement of descriptors into ingress queues 302 to follow execution order specified in the CWD.

Ingress queues 302 are used for buffering received work requests instructions or workloads for execution by an application or accelerator specified by a work request or CWD. Egress queues 308 can be used to buffer instructions or workloads and scheduling execution by a selected application or accelerator specified by a work request or CWD. In some examples, an application or accelerator can have dedicated ingress and egress queues. An application or accelerator can pull work from output queues 158 instead of being interrupted. For example, copy engine 350 has its own set of ingress and egress queues, crypto engine 352 has another set of queues, and so forth. For a fastest routing of work from an ingress queue to an egress queue, direct interconnect 306 may be used between ingress and egress queues for latency sensitive applications.

Hierarchical scheduler 304 provides quality of service support for placing work requests from ingress queues into a position in an egress queue to prioritize or deprioritize performance of the work request over other work requests. Work scheduler 300 can load balance across multiple applications and/or accelerators for a given processing stage. For instance, if 100 Fast Fourier transform (FFT) operations need to be completed, and two FFT accelerators are available (e.g., assignable execution elements within an accelerator), then the 100 FFT operations can be distributed among the two FFT accelerators. Tasks can be queued and delivered when previous task is completed so that tasks are not switched and context need not be saved or switched between task switching.

An example of packet processing is described next. Control software can configure work scheduler 300 using a combined work descriptor to program processing of a received packet. A portion of a packet received at a network interface can be provided to the system via interface 360 (e.g., PCIe, Intel^{®} Compute Express Link (CXL), Intel^{®} Data Direct I/O, or other interconnect, fabric, or interface). The packet is to be processed using the following steps in a service chain: decryption, network translation, and parsing. For every step, an accelerator or processor is used. For example, different VMs can be used for each step. For each step, a format of descriptors and pointers can be translated to be in a format that is recognized by an accelerator or processor. After completion of decryption, crypto engine 352 provides the resulting decrypted data is stored in data buffer 362 and crypto engine 352 provides a work descriptor into ingress queue 302 for work scheduler 300 to schedule a next step, network translation. Work scheduler 300 maps packets to next processing device from egress queues 308. Network translation engine (not shown) provides the resulting decrypted data is stored in data buffer 362 and provides a work descriptor into ingress queue 302 for work scheduler 300 to schedule a next step, parsing. For example, a next processing device is parser engine 356 and parser engine 356 receives a work descriptor from an egress queue 308, processes data from data buffer 362, and provides an indication work is complete to an ingress queue 302 associated with parser 356. At the end of processing, data is available in data buffer 362 to an application or for transmission by a network interface to send to another device or accelerator. Accordingly, a core is not involved in routing data for processing among hardware devices and the core does not need to track internet protocol (IP), media access control (MAC) addresses, or any step of processing.

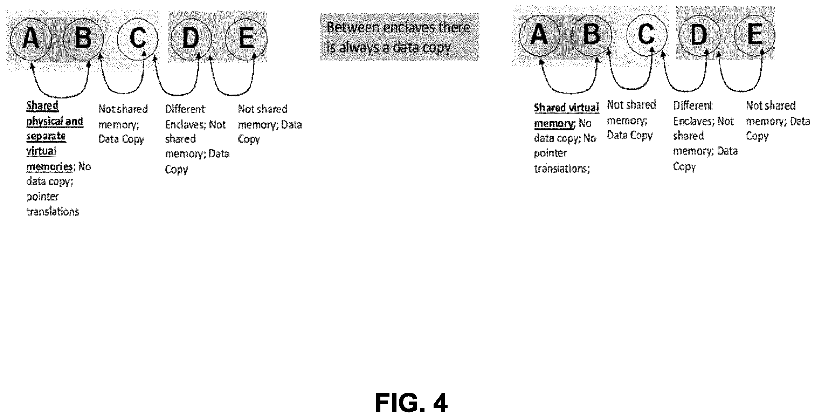

FIG. 4 depicts an example of trust clusters that depicts different levels of trust and trust groupings. Trust between entities affects sharing of data, a pointer, or pointer translation is involved in a transmission of data from a sender to a receiver. For example, for data to be provided for access by work scheduler and any hardware device for which work scheduler schedules data processing, trust level between a requester/sender entity, a receiving or next hop entity and work scheduler can influence whether data, pointer, or pointer translation is involved in making data available to a hardware device. In addition, trust level between entities that are to perform data access or processing can influence whether data, pointer, pointer translation is provided to the hardware device.

Trust can be between entities that share memory. In some examples, there are three messaging situations to arise for memory used for communication (there can be other unrelated private or shared memory spaces involved): (1) communicating entities share the same physical memory space but are in different virtual memory spaces meaning no data copy is needed, but pointer translation is applied to map into the correct virtual memory (A to B communication on the left side of FIG. 4); (2) communicating entities share the same virtual memory space meaning no data copy and no pointer translation is applied and pointer passing can be used to transfer data (A to B communication on the right side of FIG. 4); or (3) communicating entities use different physical memory spaces (either on different servers, or enforced because of security or other reason) and full data copy to a receiving side and passing new pointer to the message receiving side is applied (e.g., B to C, C to D, and D to E communications in FIG. 4). Situation (3) involves either unavailable shared memory spaces (for example, located on different servers without memory-mapped fabric in-between) or the least amount of trust between entities (for example, being in different enclaves) and may involve the highest level of data transfer, including data encryption and decryption in some cases.

Data copy and/or pointer translation could be performed inside or outside of a work scheduler. In some implementations, data copy (e.g., DMA) can be integrated within the work scheduler and an input-output memory management unit (IOMMU) can be used for translating CPU-visible virtual addresses to physical addresses. A data copy step can be added as a function invoked in a pair of ingress and egress queues. Similarly, integrated work scheduler pointer translation can be a function invoked using a pair of ingress and egress queues. To achieve the pointer translation, an MMU is used and the MMU can be either part of work scheduler or performed by a core doing dequeue from an egress queue.

In some cases, the originating entity of a workflow does not know the location of the message destination (the locality is hidden and abstracted), and the destination entity and corresponding egress queue may be determined in run-time per each workflow request by work scheduler using flow tables and/or load balancing rules. As described above, data copy or pointer translation is a function of a pair of ingress and egress queues, hence it has to be decided only after the egress queue has been determined by the work scheduler. An option is to perform such copy during the dequeue operation, but it may introduce extra latency without efficient data prefetch (with data prefetch the receiver may encounter a cache pollution problem), because the destination will need to wait until the copy operation is finished. To minimize such latency impact, data copy can be launched immediately after the egress queue determination within the work scheduler. A data copy request can include the location of the flag that will be triggered by one of the above-mentioned data movers on the copy completeness.

A destination entity can check the flag (e.g., cores could use MWAIT () instructions, user level MWAIT instructions, for instance, or other similar instructions). An MWAIT instruction allows a processor to signal an address on which to wait (MONITOR) and an instruction that causes the wait operation to commence (MWAIT). The MWAIT instruction is also a hint to the processor that it can choose to enter an implementation-dependent state while waiting for an event or for the store to the address range set up by the preceding MONITOR instruction in program flow. There is non-zero latency between knowing of the egress queue and destination entity (e.g., accelerator) reading the message entry from work scheduler, and the work scheduler integration with data mover(s) (e.g., an internal direct memory access (DMA) engine or external copy engine 350 in FIG. 3) could save large portion of that latency by launching a copy in parallel with placing of a work request on an egress queue.

Next, a description of examples of a combined work descriptor are provided. A unit of work (WLT) can include multiple parts, some of which may be performed using hardware or acceleration units. To initiate processing of a WU, a hardware entity or a core executes a process (e.g., thread, software) that sets a sequence of processing for offloaded accelerated steps required to complete a WU in a policy-prescribed manner (e.g., fastest, lowest-power way, and/or lowest total cost of ownership (TCO)). The process can create one of various types of work descriptors or a chain or array of descriptors describing how accelerators will process or operate on a particular WU over the course of processing. The process will store a combined work descriptor (CWD) into memory and make the CWD available for management by a work scheduler.

For example, software executed by a core can create a universal work descriptor (Type-1), array of descriptors (Type-2), or chain of descriptors (Type-3), although embodiments are not limited to these examples. For example, other UWD can be created from any combination of elements in any UWD. The software can provide a pointer in a Queue Entry (QE) in an ingress queue of a work scheduler and the software can indicate in a metadata field that the pointed-to CWD is an accelerated chain of work that involves multiple processing steps. Upon enqueue of a QE to the work scheduler, work scheduler can manage the performance of the CWD in at least two manners: Flow 1 or Flow 2, although other manners are possible.

For Flow 1, the work scheduler passes the QE to the output producer port, where an assigned processor (e.g., core executing software, accelerator, or other hardware device) reads the WU, performs a task assigned to the processor, then enqueues a next unit of work to an ingress queue of the work scheduler. For Flow 2, a work scheduler reads the descriptor format, tracks and loops the descriptors internally, providing them to each accelerator in turn using the corresponding egress queues, tracks completions via re-enqueues or enqueues from these accelerators to ingress queues, flags updates in memory, or through credit management techniques.

A CWD may use or include global metadata that includes status bits that indicate whether a particular thread or accelerator has finished working on a particular assigned portion of work associated with a CWD. The status bits allow the work scheduler and/or other processors to track completion of each work unit phase or incompletion of a phase (e.g., an accelerator which is not working properly). Upon completing each phase of a part of work, an accelerator could set the status bit for a phase of work in the global metadata to "done" or other metadata bits to indicate completion of a phase of work and re-enqueue the work unit for the next accelerator stage or enqueue another work unit or descriptor for the next accelerator stage.

In some embodiments, there can be an entity that is able to perform processing of all remaining or multiple consecutive stages of CWD. For example, a smart Network Interface Card (NIC) may be able to perform data copy, data parsing, data classification, data transformation, data encryption (all defined as consecutive steps of CWD) and send it back to the work scheduler with indication of completed steps or send it out to the network and indicate CWD processing completion to work scheduler. In other embodiments, an entity (e.g., firewall) may decide to interrupt/stop processing of CWD for this request and indicate the decision to the work scheduler.

Devices which are configured (e.g., software and/or hardware) to understand the universal / chained work descriptor format may be able to extract and work on only elements which are of use to them. This device configuration could remove some of the burden on the work scheduler and not involve ingress/egress path changes to format the descriptors to the accelerator because the accelerator instead can interpret a descriptor. This applies to the various formats (e.g., chained, arrays, or multidimensional).

After a sequence of work associated with a CWD is completed, the software running on the core that submitted the CWD, or driver is notified of completion of the work. This process enables cores to create and dispatch large amounts of work that require use of multiple accelerators without the cores having to monitor or control each step in the processes. Hand off and acceleration of the accelerator control plane provides significant core or CPU cycle or power savings and enables faster accelerator-to-accelerator chaining through the work scheduler.

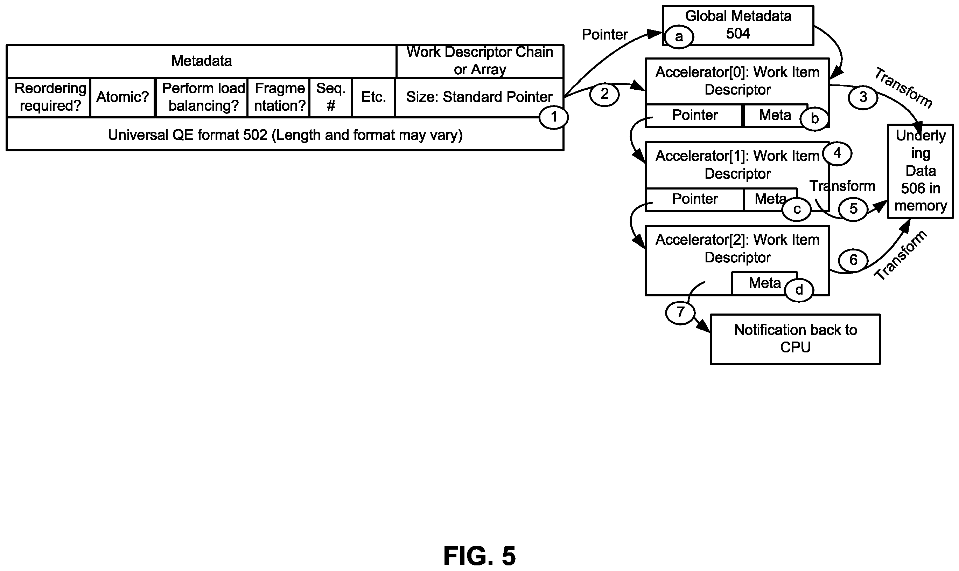

FIG. 5 shows an example of a multiple processing steps using a chained descriptor format (Type-3 referenced above). Global metadata can track the overall status or progress of each subset of the work sequence. In some examples, per-accelerator work item descriptors may track the overall status or progress of each subset of the work sequence. A core can execute a process that generates a chain descriptor of Type-3 and references the chain descriptor 502 of Type-3 in a queue entry of a work scheduler. The work scheduler can schedule subsets of the work sequence with accelerators by providing the chained descriptor to an egress queue for an accelerator. This example includes steps 1-7, where accelerators 0-2 perform a task associated with a chained descriptor 502, accelerators update global metadata 504 to indicate completion of a subset as applicable, then accelerators re-enqueue chained descriptor 502 with the work scheduler.

In some examples, the accelerators are either programmed or designed to understand this type of chained descriptor 502 as a universal work descriptor (UWD). In some examples, the work scheduler can translate chained descriptor 502 into a format that an accelerator can execute to perform work. In some examples, instead of re-enqueuing chained descriptor 502 after completing a segment of work, an accelerator can provide a pointer to a next descriptor (or the next descriptor) that is to be accessed, where the next descriptor provides a blueprint or ordering for operation of an accelerator for a next segment of work.

For example, a work descriptor 502 can include one or more of the following fields described below. In some examples, fields in work descriptor 502 can influence how work scheduler orders or groups commands and dispatches commands for execution by one or more accelerators.

| Field Name | Example description |
|---|---|
| Reordering required | Work operation once completed should be reordered before provided to workflow requesting core. Useful for packet processing. |
| Atomic | Flow is stateful so work should be done using specific accelerators and in a specified sequence. Work scheduler to oversee operation to satisfy this requirement. Work is in a specified sequence or with affinity to a particular accelerator. |
| Perform load balancing | Allow splitting workload among multiple devices to keep devices evenly loaded. Work scheduler can distribute workload based on current capacities and/or capabilities (some capabilities of a particular device may not be available for various reasons) of each device. |
| Fragmentation | If large piece of data, fragment across accelerators. Example: video stream encode/decode split into video blocks in the frame or separate video frames across accelerators. May require reordering of fragments after the entire processing of all fragments is finished. Fragmented packets may be reassembled later. For instance, large network frames that have been split up can be reassembled. |
| Sequence# | Allows work scheduler to track multiple simultaneous works to determine the next processing decision. Depending on implementation, the sequence# can be global, sequential per requestor, or utilize other sequencing policies. Sequence number enables reordering into an output queue. Sequence number indicates the original order of the work items, packets, frames and so forth such that they can be reassembled into the correct order after highly parallel or asynchronous processing. |
| Size | Pointer to chain or array of descriptors and their total size. |
| | Added to queue entry of work scheduler. Can point to location and size of global metadata/data in memory. |

Global metadata 504 can indicate how accelerators should work on data and which phase of work has completed or is incomplete. A misbehaving or overloaded accelerator can be identified by non-completion of a phase of work in a timely manner (timeout). In some examples, a core or work scheduler can abort sequence of work. In addition to global metadata 504, the underlying data 506 (if any) is stored in memory. Every accelerator receives a work item descriptor and may receive the relevant private metadata (b), (c) or (d). Every intermediate accelerator in the chain may point to the next accelerator.

In Action (1), the work scheduler uses pointer in chain descriptor 502 to access global metadata 504 from memory. Global metadata 504 can include a pointer to a memory location or queue entry for work descriptor (a) to be performed by accelerator[0].

In Action (2), the work scheduler processes work descriptor (a) and provides work descriptor (a) in format for accelerator[0] to recognize and execute as intended. However, if accelerator[0] can read descriptor (a) and perform the instructions in descriptor (a) without translation, then no translation is performed by work scheduler or accelerator and accelerator[0] executes descriptor (a) as is. Descriptor (a) includes a pointer to next descriptor and its private metadata (b). Next descriptor is stored in memory and in some cases, pointer translation is used.

In Action (3), accelerator[0] processes data based on information in Global Metadata 504 and Underlying Data 506 and writes resulting processed data to underlying data section 506 in memory. Accelerator[0] or [1] or another device or software can transform the underlying data before being stored in memory or processed. In addition, accelerator[0] or work scheduler can update global metadata 504 to indicate work performed by accelerator[0] has completed. A transform can refer to any mathematical operation, processing, data conversion operations that a particular accelerator performs on a given work item.

In Action (4), work scheduler processes work descriptor (b) and provides work descriptor (b) in format for accelerator[1] to recognize and execute as intended. However, if accelerator[1] can read descriptor (b) and perform the instructions in descriptor (b) without translation, then no translation is performed by work scheduler or accelerator and accelerator[1] executes descriptor b as is. Descriptor (b) includes a pointer to next descriptor (c). Next descriptor (c) is stored in memory or caches and in some cases, pointer translation is used. Accelerator[1] processes the data as requested. Accelerator[1] may use Underlying Data 506 for the processing. Accelerator[0] or [1] or another device or software can transform the underlying data before being stored in memory or processed.

In Action (5), accelerator[1] writes resulting processed data to Underlying Data 506 section in memory. Accelerator[1] or another device or software can transform the underlying data before being stored in memory. In addition, accelerator[1] or work scheduler can update global meta data 504 to indicate work performed by accelerator[1] has completed.

In Action (6), work scheduler processes work descriptor (c) and provides work descriptor (c) in format for accelerator[2] to recognize and execute as intended. However, if accelerator[2] can read descriptor (c) and perform the instructions in descriptor (c) without translation, then no translation is performed by work scheduler or accelerator and accelerator[2] executes descriptor (c) as is. Accelerator[2] processes the data as requested. Accelerator[2] may use Underlying Data 506 for the processing. Accelerator[2] writes resulting processed data to Underlying Data 506 section in memory. Prior to access of underlying data 506 or writing of underlying data 506 to memory, accelerator[1] or [2] or another device or software can transform the data.

In Action (7), accelerator[2] notifies a core that service chain has completed ("completed" could also mean that the processing had been interrupted or stopped with reason indication). For example, an interrupt, user interrupt or status flag can be used to indicate the service chain has completed. In addition, accelerator[2] or work scheduler can update global meta data 504 to indicate work performed by accelerator[2] has completed. Metadata for that particular accelerator can be updated with an updating of a flag indicating that this is the last item in the chain so the notification process back to the cores should be started. Accordingly, data after processing by accelerators [0]-[2] is available for use Note that accelerators [0]-[2] can be the same or different accelerator device or accelerator instance and perform the same or different functions.

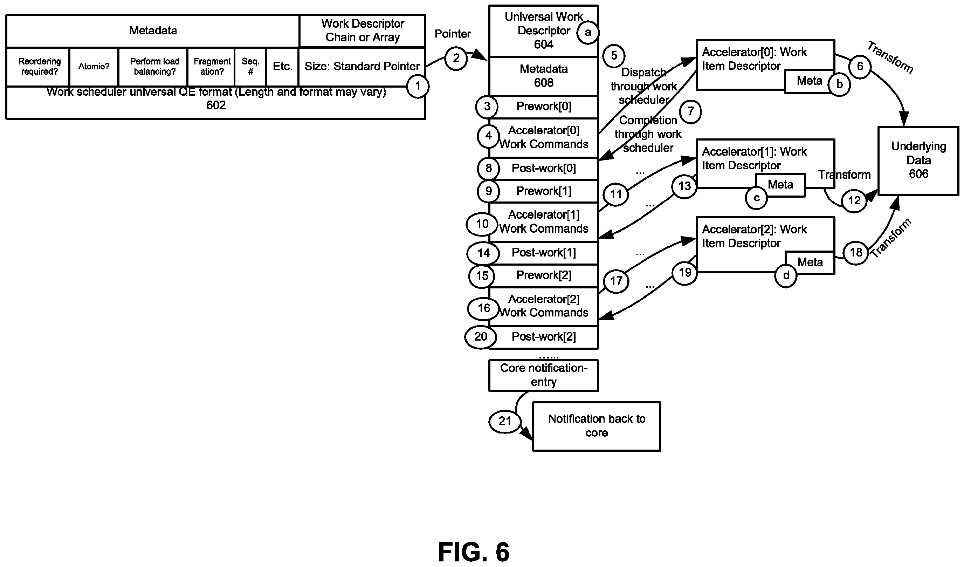

FIG. 6 depicts an example sequence whereby pre-work and post-work for each accelerator work descriptor is performed to prepare an accelerator in a sequence to properly execute a command. Pre-work and post-work can be handled by micro-engines or processors in the work scheduler to translate the output of one accelerator into an input format for use by an accelerator that is to perform a next sequence of work.

A universal work descriptor 602 (Type-2) can be used to define a workflow. A work descriptor for type-2 can be similar to a work descriptor for type-3. A work scheduler, hardware, or core executing a process can create an array of work descriptor items for each accelerator and store the descriptor items in memory, enabling accelerators to access individual descriptors from memory based, for example, on memory offsets. Accelerators may parse the work descriptors using an offset to find their relevant work sections or the work scheduler may parse and send only the relevant subset of work and commands to each accelerator. Each accelerator works on the underlying data 606 in a preprogrammed sequence of steps following rules laid out by control software or process, then re-enqueues the processed data into underlying data 606. The work scheduler assigns work to the next accelerator stage. The accelerators in this case are either programmed or designed to understand this descriptor format approach. In some embodiments, work scheduler does not need to comprehend the universal work descriptors (e.g., chain, arrays) and instead the devices can read the metadata and pick out the commands that are specifically for them and interpret the commands. Metadata 608 is used for tracking and monitoring which accelerators have completed their work (or which have failed).

An example sequence of actions is as follows. At Action (1), the work scheduler can access a pointer from work descriptor 602. At Action (2), the pointer can be used to access a UWD 604 from memory. UWD 604 can include an array of work commands[0] - [2] as well as pre-work[0]-[2] and post-work[0]-[2]. UWD 604 can in addition or alternatively include a pointer or memory offset to each work command, pre-work, and post-work element.

At Action (3), work scheduler and/or accelerator[0] can perform prework[0] to modify accelerator[0] work commands and/or descriptors to a format that accelerator[0] can execute properly. For example, semantic conversions can take place. In addition, or alternatively, load balancing or work division can take place. At Action (4), a work command is prepared for execution and in Action (5), the command is dispatched to accelerator[0] that executes the command. At Action (6), accelerator[0] can store results from the work commands specified in work descriptor[A] in memory (shown as underlying data). At 606, metadata 608 for work descriptor[A] can be updated to indicate that work descriptor[A] has been completed. Metadata 608 can be stored in memory accessible to work scheduler or a core that dispatched a workstream for execution. At Action (7), a completion indication is made to work scheduler after execution of work descriptor[A]. At Action (8), work scheduler or accelerator can perform post-work[0] for the work performed by accelerator[0]. Post-work[0] can include transition work or data transformation to some common format, or notification of various entities about work completion, and so forth.

At Actions [9]-[14], similar operations to respective Actions [3]-[8] can occur but for Accelerator[1] and work descriptor[B]. Accordingly, data processed by accelerator[1] can be made available for a next accelerator (accelerator[2]). At Actions [15]-[20], similar operations to respective Actions [3]-[8] can occur but for Accelerator[2] and work descriptor[C]. Accordingly, data processed by accelerator[2] can be made available for a next accelerator or to a requesting application or the core that scheduled a sequence of work events. At Action [21], work scheduler or accelerator[2] notifies core that service chain has completed. For example, an interrupt, user interrupt or status flag can be used to indicate the service chain has completed. In addition, accelerator[2] or work scheduler can update metadata 608 to indicate work performed by accelerator[2] has completed. Accordingly, data after processing by accelerators[0]-[2] is available for use. Note that accelerators[0]-[2] can be the same or different accelerator devices or perform the same or different functions.

Accelerator work commands such as actions [4], [10], and [16] may refer to any operations needed to communicate with a particular accelerator. In some cases, actions [4], [10], or [16] may be a memory-mapped doorbell write to the device indicating "operate on this data." In other cases, actions [4], [10], and [16] may include a tail pointer update (as in the case of a device which uses queues like a network interface device). In some cases, tracking a small amount of state takes place, such as in the case of a write to a remote direct memory access (RDMA) network interface queue, which then generates a corresponding completion.

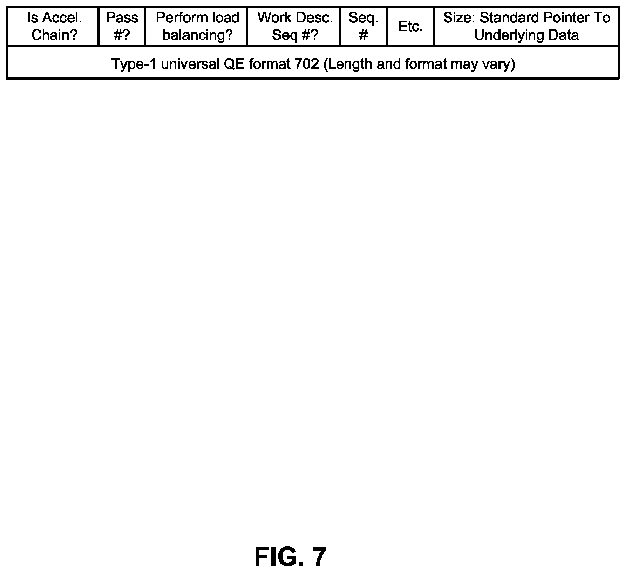

FIG. 7 depicts a type-1 universal work descriptor format. Using Type-1 descriptor 702, a work scheduler can dynamically update or modify the in-flight units of work and track their completion. For example, a type-1 work descriptor 702 can include one or more of the following fields.

| Field Name | Example description |
|---|---|
| Is accelerator chain | Specifies whether a chain of work is configured Whether this descriptor is part of an accelerator chain or just a traditional queue entry. |
| Pass# | Process address space ID |
| Perform load balancing | Allow splitting workload among multiple devices. Work scheduler can distribute workload based on current capacities and/or capabilities (some capabilities of a particular device may not be available for various reasons) of each device. |
| Work Descriptor Sequence # or Work sequence metadata pointer | Work unit sequence number |
| Sequence# | Allows work scheduler to track multiple simultaneous works to determine the next processing decision. Depending on implementation, the sequence# can be global, sequential per requestor, or utilize other sequencing policies. Sequence number enables reordering into an output queue. Sequence number indicates the original order of the work items, packets, frames and so forth such that they can be reassembled into the correct order after highly parallel or asynchronous processing. |
| Size: | Pointer to chain or array of descriptors and their total size. |
| | Added to queue entry of work scheduler. Can point to location and size of global metadata/data in memory. |

In the Type-1 usage for instance, work scheduler may submit work to accelerators on behalf of a user thread, in which case the process address space ID (PASID) of the original core that submitted the work may be used, and accelerators might not need to know the difference between the work scheduler submitting work or the core-executed threads submitting work.

Note that batching of work is also possible, in which one pointer through the work scheduler may reference multiple packed units of work as a multidimensional array of arrays (extension of Type-2) or an array of chains (extension of Type-3).

Deadline time stamps may also be included in the metadata to indicate a universal synchronized time stamp across accelerators and the work scheduler by which the work submitted to the accelerators must be finished to enable scheduling within the accelerators themselves (or to enable dropping of data which is no longer relevant if the deadline has passed). This could be included in the work scheduler metadata as in the case of the time stamp, or in the metadata of the new work descriptor types.

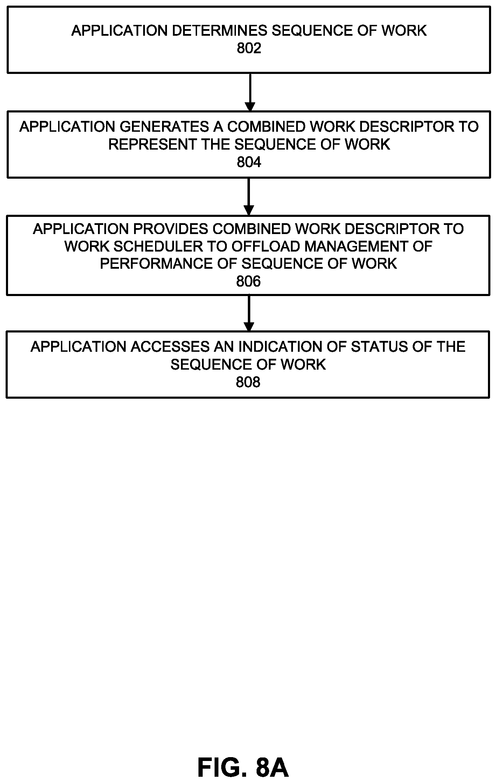

FIG. 8A depicts an example process for use by an application to request a workflow execution by a work scheduler. At 802, the application can determine a sequence of work to be performed on data using one or more accelerators. For example, the application can perform virtual network functions (VNF) to process packets received from a network medium (or packets to be transmitted to a network medium) and can be an implementation of a network function run in virtual machines (VMs). The application can request video encoding or decoding. The application can request inference, image recognition, or speech recognition. The application can request data encryption or decryption. The application can request to move data in the background from one memory location to another. The application can request to perform table lookups. Such requests could be either independent requests, or a single request to perform multiple actions at once (chained request). The application can request a packet copy, a hash lookup, a compression, a decompression, a de-encapsulation / header removal, a match/action table lookup or action, and so forth. The application can be executed by a core or central processing unit. At 804, the application can form a combined or universal work descriptor to refer to a sequence of work to be performed. At 806, the application can provide the combined or universal work descriptor to a work scheduler to offload management of performance of the sequence of work. At 808, the application accesses an indication of status of the sequence of work. For example, the indication can be that work is completed and processed data is available or the work has timed out due to failure of an accelerator. An indication that work is completed can be provided in metadata stored in memory.

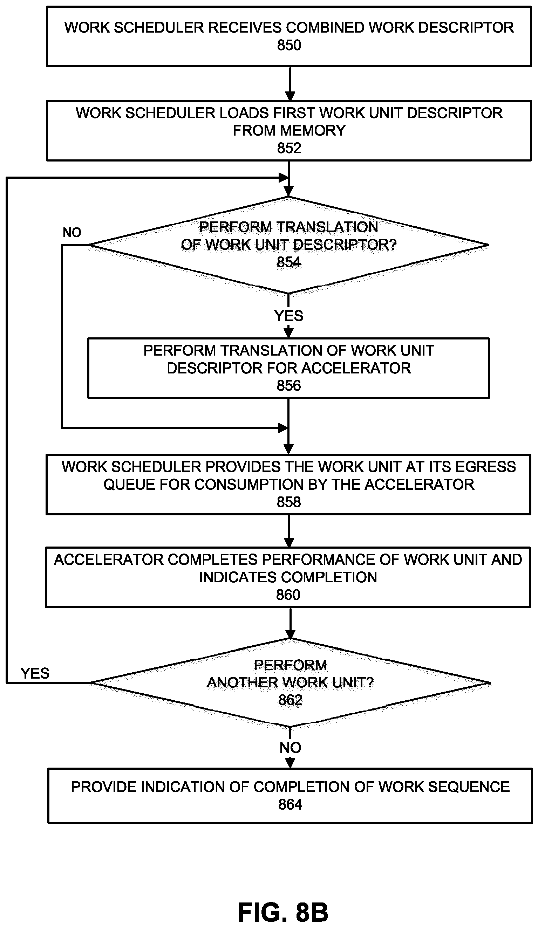

FIG. 8B depicts an example process for use by a work scheduler to perform a string of work units in a sequence of work. At 850, the work scheduler receive a combined work descriptor that references at least one work unit in a sequence of work units. For example, a first work unit can be stored in memory and the combined work descriptor can refer to a location of the first work unit in memory. The first work unit can refer to a location of another descriptor for a work unit in memory. In some examples, the combined work descriptor includes offsets in memory to work units to perform by the work scheduler or an accelerator. The combined work descriptor can provide a policy for scheduling of work units. For example, the combined work descriptor can specify load balancing of work units, reordering of work units, and other manners of scheduling work units among available accelerators.

At 852, the work scheduler can load a first work unit or descriptor from memory. The combined work descriptor can include a pointer to the first work unit or descriptor in memory. The work scheduler can retrieve the first work unit or descriptor.

At 854, the work scheduler determines whether to perform translation on the first work unit or descriptor if its format is not compatible or accepted by an accelerator that is to perform the first work unit. If a translation is to be performed, 856 follows. In some examples, the format of the first work unit or descriptor is compatible with the accelerator and 858 follows.

At 856, the work scheduler performs a translation of the work unit into a format compatible with the accelerator. In some examples, the work scheduler can request the accelerator to perform a translation of a work unit descriptor. In some examples, the work scheduler and the accelerator can perform a translation of a work unit descriptor. The process continues to 858.

At 858, the work scheduler provides the work unit at its egress queue for consumption and processing by the accelerator. The accelerator can be selected using load balancing (if permitted by the combined work descriptor) or other techniques.

At 860, the accelerator completes performance of the work unit and records the completion into a completion tracker. The completion tracker can be in meta data that is stored in memory and accessible to the work scheduler and the application that issued the combined work descriptor. Processed data can be stored in memory. In this example, an accelerator may not be known to the application that requested processing and is selected by the work scheduler. Conversely, the accelerator may not know the application that requested processing.

At 862, a determination is made as to whether a next work unit is to be performed. A next work unit can be referenced in a pointer by a completed or current work unit or in a combined work descriptor. If a next work unit is to be performed, the process continues to 854 for the next work unit.

If a next work unit is not to be performed, then the process continues to 864. At 864, an indication is given to the issuer (e.g., application) of the combined work descriptor that the workflow has completed. Processed data stored in memory can be made available to the issuer of the combined work descriptor.

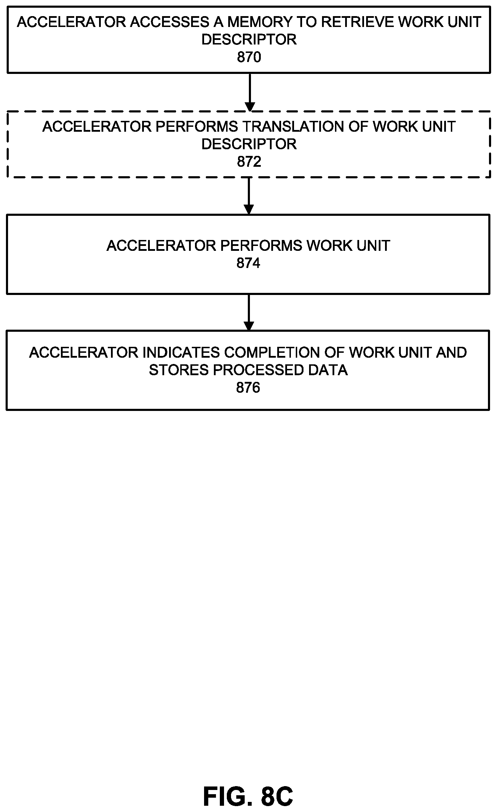

FIG. 8C depicts a process that can be performed by an accelerator. At 870, an accelerator accesses a memory to retrieve a work unit descriptor based on a request from a work scheduler. The work unit descriptor can be specified as being located at an offset from a starting memory location. The offset can be specified to the accelerator. At 872, an optional action, the accelerator performs translation of the work unit descriptor to generate a format of work descriptor that is compatible with the accelerator. However, if the work descriptor is accepted by the accelerator, accelerator does not perform translation. At 874, the accelerator performs the work unit in accordance with the work unit descriptor. At 876, the accelerator indicates completion of the work unit and stores processed data in memory. For example, the accelerator can indicate completion of the work unit in meta data stored in memory. The next action can be to perform a next work unit associated with a combined work descriptor or to notify an application of completion of work referenced by a combined work descriptor. The next action can be performed by another or the same accelerator. In some examples, the accelerator provides a queue entry (QE) in the work scheduler to request performance of a next action.

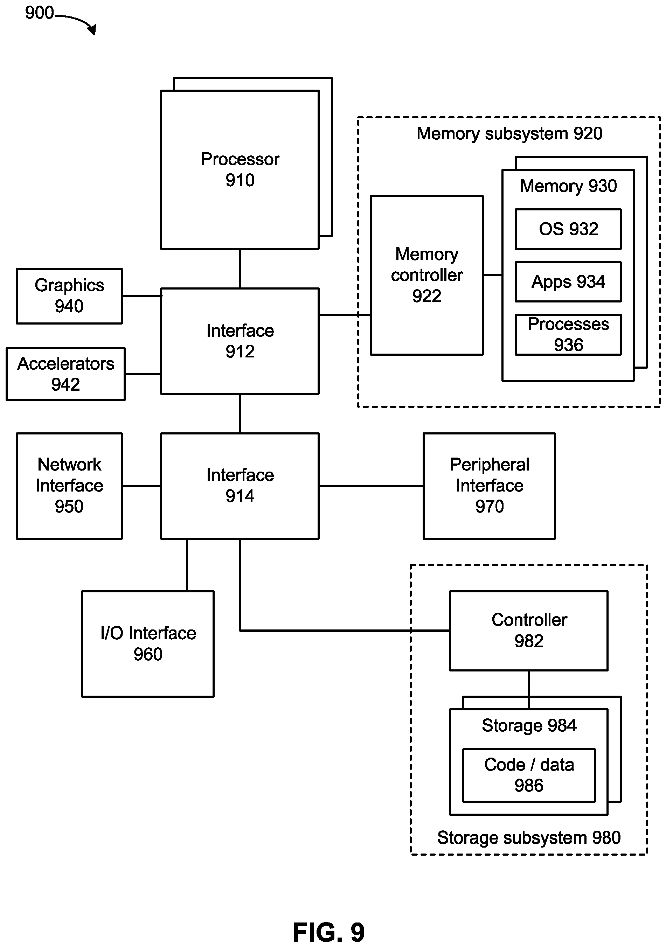

FIG. 9 depicts a system. The system can use embodiments described herein to allocate accelerator traffic to an accelerator memory via an accelerator fabric instead of using a host-to-device fabric. System 900 includes processor 910, which provides processing, operation management, and execution of instructions for system 900. Processor 910 can include any type of microprocessor, central processing unit (CPU), graphics processing unit (GPU), processing core, or other processing hardware to provide processing for system 900, or a combination of processors. Processor 910 controls the overall operation of system 900, and can be or include, one or more programmable general-purpose or special-purpose microprocessors, digital signal processors (DSPs), programmable controllers, application specific integrated circuits (ASICs), programmable logic devices (PLDs), or the like, or a combination of such devices.

In one example, system 900 includes interface 912 coupled to processor 910, which can represent a higher speed interface or a high throughput interface for system components that needs higher bandwidth connections, such as memory subsystem 920 or graphics interface components 940, or accelerators 942. Interface 912 represents an interface circuit, which can be a standalone component or integrated onto a processor die. Where present, graphics interface 940 interfaces to graphics components for providing a visual display to a user of system 900. In one example, graphics interface 940 can drive a high definition (HD) display that provides an output to a user. High definition can refer to a display having a pixel density of approximately 100 PPI (pixels per inch) or greater and can include formats such as full HD (e.g., 1080p), retina displays, 4K (ultra-high definition or UHD), or others. In one example, the display can include a touchscreen display. In one example, graphics interface 940 generates a display based on data stored in memory 930 or based on operations executed by processor 910 or both. In one example, graphics interface 940 generates a display based on data stored in memory 930 or based on operations executed by processor 910 or both.

Accelerators 942 can be a fixed function offload engine that can be accessed or used by a processor 910. For example, an accelerator among accelerators 942 can provide compression (DC) capability, cryptography services such as public key encryption (PKE), cipher, hash/authentication capabilities, decryption, or other capabilities or services. In some embodiments, in addition or alternatively, an accelerator among accelerators 942 provides field select controller capabilities as described herein. In some cases, accelerators 942 can be integrated into a CPU socket (e.g., a connector to a motherboard or circuit board that includes a CPU and provides an electrical interface with the CPU). For example, accelerators 942 can include a single or multi-core processor, graphics processing unit, logical execution unit single or multi-level cache, functional units usable to independently execute programs or threads, application specific integrated circuits (ASICs), neural network processors (NNPs), programmable control logic, and programmable processing elements such as field programmable gate arrays (FPGAs). Accelerators 942 can provide multiple neural networks, processor cores, or graphics processing units can be made available for use by artificial intelligence (AI) or machine learning (ML) models. For example, the AI model can use or include any or a combination of: a reinforcement learning scheme, Q-learning scheme, deep-Q learning, or Asynchronous Advantage Actor-Critic (A3C), combinatorial neural network, recurrent combinatorial neural network, or other AI or ML model. Multiple neural networks, processor cores, or graphics processing units can be made available for use by AI or ML models.

Memory subsystem 920 represents the main memory of system 900 and provides storage for code to be executed by processor 910, or data values to be used in executing a routine. Memory subsystem 920 can include one or more memory devices 930 such as read-only memory (ROM), flash memory, one or more varieties of random access memory (RAM) such as DRAM, or other memory devices, or a combination of such devices. Memory 930 stores and hosts, among other things, operating system (OS) 932 to provide a software platform for execution of instructions in system 900. Additionally, applications 934 can execute on the software platform of OS 932 from memory 930. Applications 934 represent programs that have their own operational logic to perform execution of one or more functions. Processes 936 represent agents or routines that provide auxiliary functions to OS 932 or one or more applications 934 or a combination. OS 932, applications 934, and processes 936 provide software logic to provide functions for system 900. In one example, memory subsystem 920 includes memory controller 922, which is a memory controller to generate and issue commands to memory 930. It will be understood that memory controller 922 could be a physical part of processor 910 or a physical part of interface 912. For example, memory controller 922 can be an integrated memory controller, integrated onto a circuit with processor 910.

While not specifically illustrated, it will be understood that system 900 can include one or more buses or bus systems between devices, such as a memory bus, a graphics bus, interface buses, or others. Buses or other signal lines can communicatively or electrically couple components together, or both communicatively and electrically couple the components. Buses can include physical communication lines, point-to-point connections, bridges, adapters, controllers, or other circuitry or a combination. Buses can include, for example, one or more of a system bus, a Peripheral Component Interconnect (PCI) bus, a Hyper Transport or industry standard architecture (ISA) bus, a small computer system interface (SCSI) bus, a universal serial bus (USB), an Institute of Electrical and Electronics Engineers (IEEE) standard 1394 bus (Firewire), or Compute Express Link (CXL).

In one example, system 900 includes interface 914, which can be coupled to interface 912. In one example, interface 914 represents an interface circuit, which can include standalone components and integrated circuitry. In one example, multiple user interface components or peripheral components, or both, couple to interface 914. Network interface 950 provides system 900 the ability to communicate with remote devices (e.g., servers or other computing devices) over one or more networks. Network interface 950 can include an Ethernet adapter, wireless interconnection components, cellular network interconnection components, USB (universal serial bus), or other wired or wireless standards-based or proprietary interfaces. Network interface 950 can transmit data to a device that is in the same data center or rack or a remote device, which can include sending data stored in memory. Network interface 950 can receive data from a remote device, which can include storing received data into memory. Various embodiments can be used in connection with network interface 950, processor 910, and memory subsystem 920.

In one example, system 900 includes one or more input/output (I/O) interface(s) 960. I/O interface 960 can include one or more interface components through which a user interacts with system 900 (e.g., audio, alphanumeric, tactile/touch, or other interfacing). Peripheral interface 970 can include any hardware interface not specifically mentioned above. Peripherals refer generally to devices that connect dependently to system 900. A dependent connection is one where system 900 provides the software platform or hardware platform or both on which operation executes, and with which a user interacts.

In one example, system 900 includes storage subsystem 980 to store data in a nonvolatile manner. In one example, in certain system implementations, at least certain components of storage 980 can overlap with components of memory subsystem 920. Storage subsystem 980 includes storage device(s) 984, which can be or include any conventional medium for storing large amounts of data in a nonvolatile manner, such as one or more magnetic, solid state, or optical based disks, or a combination. Storage 984 holds code or instructions and data 986 in a persistent state (i.e., the value is retained despite interruption of power to system 900). Storage 984 can be generically considered to be a "memory," although memory 930 is typically the executing or operating memory to provide instructions to processor 910. Whereas storage 984 is nonvolatile, memory 930 can include volatile memory (i.e., the value or state of the data is indeterminate if power is interrupted to system 900). In one example, storage subsystem 980 includes controller 982 to interface with storage 984. In one example controller 982 is a physical part of interface 914 or processor 910 or can include circuits or logic in both processor 910 and interface 914.

A volatile memory is memory whose state (and therefore the data stored in it) is indeterminate if power is interrupted to the device. Dynamic volatile memory requires refreshing the data stored in the device to maintain state. One example of dynamic volatile memory incudes DRAM (Dynamic Random Access Memory), or some variant such as Synchronous DRAM (SDRAM). A memory subsystem as described herein may be compatible with a number of memory technologies, such as DDR3 (Double Data Rate version 3, original release by JEDEC (Joint Electronic Device Engineering Council) on June 27, 2007). DDR4 (DDR version 4, initial specification published in September 2012 by JEDEC), DDR4E (DDR version 4), LPDDR3 (Low Power DDR version3, JESD209-3B, August 2013 by JEDEC), LPDDR4) LPDDR version 4, JESD209-4, originally published by JEDEC in August 2014), WIO2 (Wide Input/output version 2, JESD229-2 originally published by JEDEC in August 2014, HBM (High Bandwidth Memory, JESD325, originally published by JEDEC in October 2013, LPDDR5 (currently in discussion by JEDEC), HBM2 (HBM version 2), currently in discussion by JEDEC, DDR5 (originally published in December 2017), or others or combinations of memory technologies, and technologies based on derivatives or extensions of such specifications. The JEDEC standards are available at www.jedec.org.

A non-volatile memory (NVM) device is a memory whose state is determinate even if power is interrupted to the device. In one embodiment, the NVM device can comprise a block addressable memory device, such as NAND technologies, or more specifically, multi-threshold level NAND flash memory (for example, Single-Level Cell ("SLC"), Multi-Level Cell ("MLC"), Quad-Level Cell ("QLC"), Tri-Level Cell ("TLC"), or some other NAND). A NVM device can also comprise a byte-addressable write-in-place three dimensional cross point memory device, or other byte addressable write-in-place NVM device (also referred to as persistent memory), such as single or multi-level Phase Change Memory (PCM) or phase change memory with a switch (PCMS), NVM devices that use chalcogenide phase change material (for example, chalcogenide glass), resistive memory including metal oxide base, oxygen vacancy base and Conductive Bridge Random Access Memory (CB-RAM), nanowire memory, ferroelectric random access memory (FeRAM, FRAM), magneto resistive random access memory (MRAM) that incorporates memristor technology, spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory.

A power source (not depicted) provides power to the components of system 900. More specifically, power source typically interfaces to one or multiple power supplies in system 900 to provide power to the components of system 900. In one example, the power supply includes an AC to DC (alternating current to direct current) adapter to plug into a wall outlet. Such AC power can be renewable energy (e.g., solar power) power source. In one example, power source includes a DC power source, such as an external AC to DC converter. In one example, power source or power supply includes wireless charging hardware to charge via proximity to a charging field. In one example, power source can include an internal battery, alternating current supply, motionbased power supply, solar power supply, or fuel cell source.

In an example, system 900 can be implemented using interconnected compute sleds of processors, memories, storages, network interfaces, and other components. High speed interconnects can be used such as PCIe, Ethernet, or optical interconnects (or a combination thereof).

Embodiments herein may be implemented in various types of computing and networking equipment, such as switches, routers, racks, and blade servers such as those employed in a data center and/or server farm environment. The servers used in data centers and server farms comprise arrayed server configurations such as rack-based servers or blade servers. These servers are interconnected in communication via various network provisions, such as partitioning sets of servers into Local Area Networks (LANs) with appropriate switching and routing facilities between the LANs to form a private Intranet. For example, cloud hosting facilities may typically employ large data centers with a multitude of servers. A blade comprises a separate computing platform that is configured to perform server-type functions, that is, a "server on a card." Accordingly, each blade includes components common to conventional servers, including a main printed circuit board (main board) providing internal wiring (i.e., buses) for coupling appropriate integrated circuits (ICs) and other components mounted to the board.

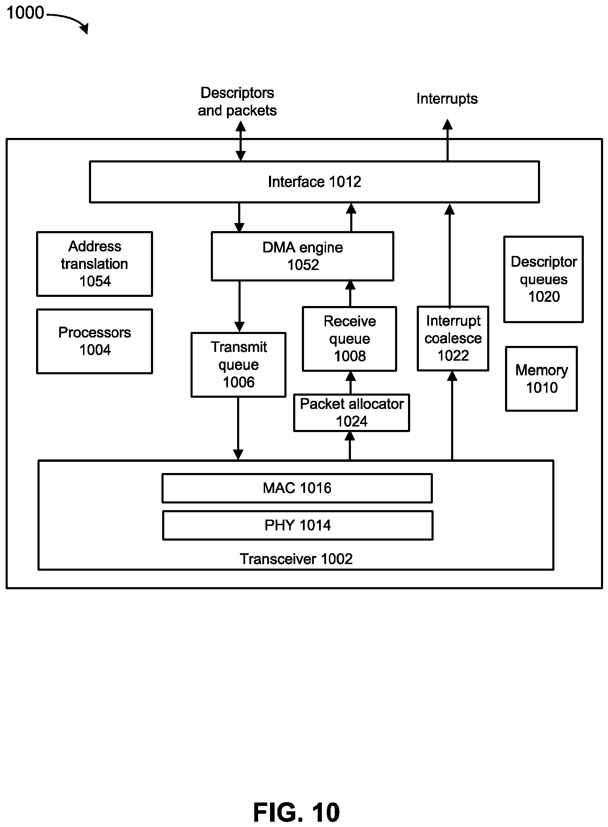

FIG. 10 depicts a network interface that can use embodiments or be used by embodiments. Network interface 1000 can include transceiver 1002, processors 1004, transmit queue 1006, receive queue 1008, memory 1010, and bus interface 1012, and DMA engine 1052. Transceiver 1002 can be capable of receiving and transmitting packets in conformance with the applicable protocols such as Ethernet as described in IEEE 802.3, although other protocols may be used. Transceiver 1002 can receive and transmit packets from and to a network via a network medium (not depicted). Transceiver 1002 can include PHY circuitry 1014 and media access control (MAC) circuitry 1016. PHY circuitry 1014 can include encoding and decoding circuitry (not shown) to encode and decode data packets according to applicable physical layer specifications or standards. MAC circuitry 1016 can be configured to assemble data to be transmitted into packets, that include destination and source addresses along with network control information and error detection hash values. Processors 1004 can be any a combination of a: processor, core, graphics processing unit (GPU), field programmable gate array (FPGA), application specific integrated circuit (ASIC), or other programmable hardware device that allow programming of network interface 1000. For example, processors 1004 can provide for generating a combined work descriptor for a sequence of work for management by a work scheduler. For example, a "smart network interface" can provide packet processing capabilities in the network interface using processors 1004.

Packet allocator 1024 can provide distribution of received packets for processing by multiple CPUs or cores using timeslot allocation described herein or RSS. When packet allocator 1024 uses RSS, packet allocator 1024 can calculate a hash or make another determination based on contents of a received packet to determine which CPU or core is to process a packet.

Interrupt coalesce 1022 can perform interrupt moderation whereby network interface interrupt coalesce 1022 waits for multiple packets to arrive, or for a time-out to expire, before generating an interrupt to host system to process received packet(s). Receive Segment Coalescing (RSC) can be performed by network interface 1000 whereby portions of incoming packets are combined into segments of a packet. Network interface 1000 provides this coalesced packet to an application.

Direct memory access (DMA) engine 1052 can copy a packet header, packet payload, and/or descriptor directly from host memory to the network interface or vice versa, instead of copying the packet to an intermediate buffer at the host and then using another copy operation from the intermediate buffer to the destination buffer. In some embodiments, multiple DMA engines are available for transfer of contents of packets to a destination memory associated with a host device or a destination memory associated with an accelerator device. Address translation 1054 can be used to determine whether a translation of an address provided with a received packet is available in a cache of network interface 1000.

Memory 1010 can be any type of volatile or non-volatile memory device and can store any queue or instructions used to program network interface 1000. Transmit queue 1006 can include data or references to data for transmission by network interface. Receive queue 1008 can include data or references to data that was received by network interface from a network. Descriptor queues 1020 can include descriptors that reference data or packets in transmit queue 1006 or receive queue 1008 and corresponding destination memory regions. Bus interface 1012 can provide an interface with host device (not depicted). For example, bus interface 1012 can be compatible with PCI, PCI Express, PCI-x, Serial ATA, and/or USB compatible interface (although other interconnection standards may be used).

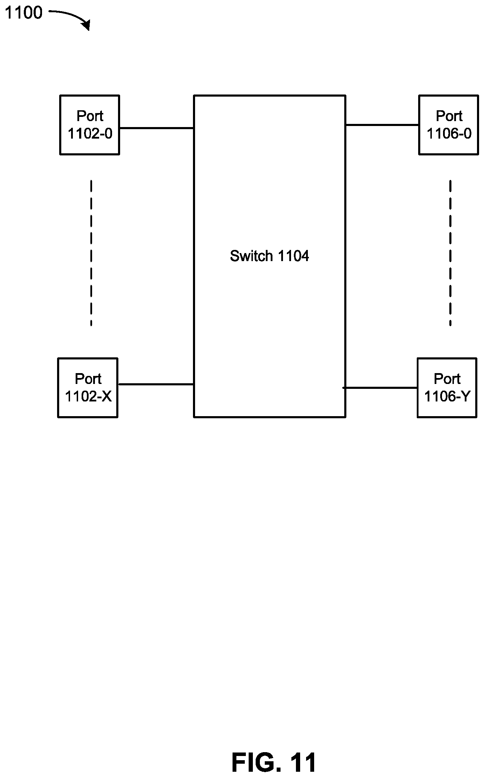

FIG. 11 depicts a switch. Various embodiments can be used in or with the switch of FIG. 11. Switch 1104 can route packets or frames of any format or in accordance with any specification from any port 1102-0 to 1102-X to any of ports 1106-0 to 1106-Y (or vice versa). Any of ports 1102-0 to 1102-X can be connected to a network of one or more interconnected devices. Similarly, any of ports 1106-0 to 1106-X can be connected to a network of one or more interconnected devices. Switch 1104 can decide which port to transfer packets or frames to using a table that maps packet characteristics with an associated output port. In addition, switch 1104 can perform packet replication for forwarding of a packet or frame to multiple ports and queuing of packets or frames prior to transfer to an output port.

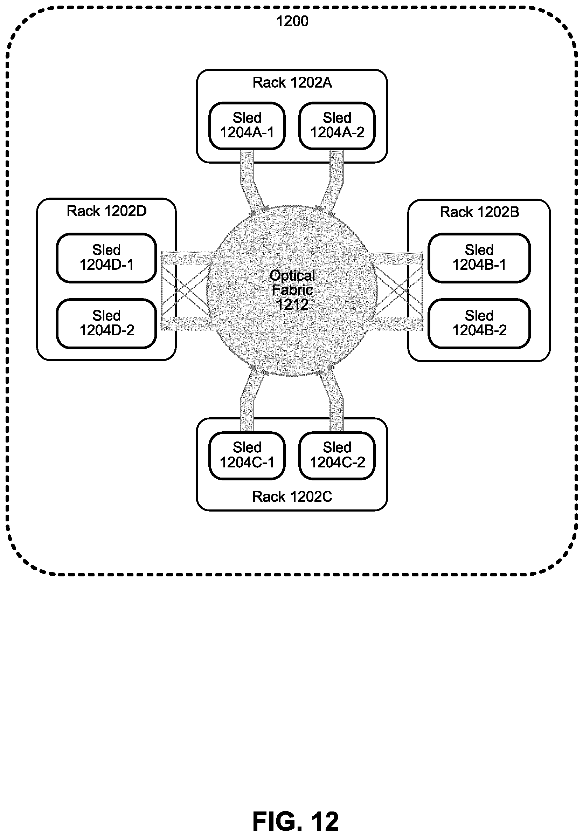

FIG. 12 depicts an example of a data center. Various embodiments can be used in or with the data center of FIG. 12 to interconnect cores, work scheduler, and accelerators. As shown in FIG. 12, data center 1200 may include an optical fabric 1212. Optical fabric 1212 may generally include a combination of optical signaling media (such as optical cabling) and optical switching infrastructure via which any particular sled in data center 1200 can send signals to (and receive signals from) the other sleds in data center 1200. The signaling connectivity that optical fabric 1212 provides to any given sled may include connectivity both to other sleds in a same rack and sleds in other racks. Data center 1200 includes four racks 1202A to 1202D and racks 1202A to 1202D house respective pairs of sleds 1204A-1 and 1204A-2, 1204B-1 and 1204B-2, 1204C-1 and 1204C-2, and 1204D-1 and 1204D-2. Thus, in this example, data center 1200 includes a total of eight sleds. Optical fabric 1212 can provide sled signaling connectivity with one or more of the seven other sleds. For example, via optical fabric 1212, sled 1204A-1 in rack 1202A may possess signaling connectivity with sled 1204A-2 in rack 1202A, as well as the six other sleds 1204B-1, 1204B-2, 1204C-1, 1204C-2, 1204D-1, and 1204D-2 that are distributed among the other racks 1202B, 1202C, and 1202D of data center 1200. The embodiments are not limited to this example. For example, fabric 1212 can provide optical and/or electrical signaling.

Various examples may be implemented using hardware elements, software elements, or a combination of both. In some examples, hardware elements may include devices, components, processors, microprocessors, circuits, circuit elements (e.g., transistors, resistors, capacitors, inductors, and so forth), integrated circuits, ASICs, PLDs, DSPs, FPGAs, memory units, logic gates, registers, semiconductor device, chips, microchips, chip sets, and so forth. In some examples, software elements may include software components, programs, applications, computer programs, application programs, system programs, machine programs, operating system software, middleware, firmware, software modules, routines, subroutines, functions, methods, procedures, software interfaces, APIs, instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation. It is noted that hardware, firmware and/or software elements may be collectively or individually referred to herein as "module," "logic," "circuit," or "circuitry."

Some examples may be implemented using or as an article of manufacture or at least one computer-readable medium. A computer-readable medium may include a non-transitory storage medium to store logic. In some examples, the non-transitory storage medium may include one or more types of computer-readable storage media capable of storing electronic data, including volatile memory or non-volatile memory, removable or non-removable memory, erasable or nonerasable memory, writeable or re-writeable memory, and so forth. In some examples, the logic may include various software elements, such as software components, programs, applications, computer programs, application programs, system programs, machine programs, operating system software, middleware, firmware, software modules, routines, subroutines, functions, methods, procedures, software interfaces, API, instruction sets, computing code, computer code, code segments, computer code segments, words, values, symbols, or any combination thereof.

According to some examples, a computer-readable medium may include a non-transitory storage medium to store or maintain instructions that when executed by a machine, computing device or system, cause the machine, computing device or system to perform methods and/or operations in accordance with the described examples. The instructions may include any suitable type of code, such as source code, compiled code, interpreted code, executable code, static code, dynamic code, and the like. The instructions may be implemented according to a predefined computer language, manner or syntax, for instructing a machine, computing device or system to perform a certain function. The instructions may be implemented using any suitable high-level, low-level, object-oriented, visual, compiled and/or interpreted programming language.

One or more aspects of at least one example may be implemented by representative instructions stored on at least one machine-readable medium which represents various logic within the processor, which when read by a machine, computing device or system causes the machine, computing device or system to fabricate logic to perform the techniques described herein. Such representations, known as "IP cores" may be stored on a tangible, machine readable medium and supplied to various customers or manufacturing facilities to load into the fabrication machines that actually make the logic or processor.

The appearances of the phrase "one example" or "an example" are not necessarily all referring to the same example or embodiment. Any aspect described herein can be combined with any other aspect or similar aspect described herein, regardless of whether the aspects are described with respect to the same figure or element. Division, omission or inclusion of block functions depicted in the accompanying figures does not infer that the hardware components, circuits, software and/or elements for implementing these functions would necessarily be divided, omitted, or included in embodiments.

Some examples may be described using the expression "coupled" and "connected" along with their derivatives. These terms are not necessarily intended as synonyms for each other. For example, descriptions using the terms "connected" and/or "coupled" may indicate that two or more elements are in direct physical or electrical contact with each other. The term "coupled," however, may also mean that two or more elements are not in direct contact with each other, but yet still co-operate or interact with each other.

The terms "first," "second," and the like, herein do not denote any order, quantity, or importance, but rather are used to distinguish one element from another. The terms "a" and "an" herein do not denote a limitation of quantity, but rather denote the presence of at least one of the referenced items. The term "asserted" used herein with reference to a signal denote a state of the signal, in which the signal is active, and which can be achieved by applying any logic level either logic 0 or logic 1 to the signal. The terms "follow" or "after" can refer to immediately following or following after some other event or events. Other sequences of steps may also be performed according to alternative embodiments. Furthermore, additional steps may be added or removed depending on the particular applications. Any combination of changes can be used and one of ordinary skill in the art with the benefit of this disclosure would understand the many variations, modifications, and alternative embodiments thereof.

Disjunctive language such as the phrase "at least one of X, Y, or Z," unless specifically stated otherwise, is otherwise understood within the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present. Additionally, conjunctive language such as the phrase "at least one of X, Y, and Z," unless specifically stated otherwise, should also be understood to mean X, Y, Z, or any combination thereof, including "X, Y, and/or Z."'

## Claims

1. A work scheduler apparatus comprising:
an input interface (360) to receive a combined work descriptor, the combined work descriptor associated with at least one processing operation, the at least one processing operation to be managed by the work scheduler apparatus, wherein the combined work descriptor specifies a sequence of software modules and/or hardware devices that are to perform operations on data, wherein the combined work descriptor includes multiple work descriptors that describe respective work items in a sequence of work items, wherein each work descriptor includes a pointer to the next work descriptor;
an ingress queue (302) to receive a work request generated by the work scheduler based on the combined work descriptor for performance by an accelerator;
an egress queue (308) to store the work request assigned to a target accelerator;
a scheduler (304) configured to assign the work request in the ingress queue (302) to the egress queue (308) based on a priority of the work request, wherein the work request includes a reference to another work request, wherein the priority is defined in a policy specified in the combined work descriptor; and
logic to provide an identifier of a result data to a requesting entity that requested operations based on the combined work descriptor.

2. The work scheduler apparatus of claim 1, wherein the combined work descriptor is to refer to a first work request, the first work request to include a reference to a second work request to be performed by the target accelerator, and the work scheduler apparatus comprising a translator (310) to translate the first work request to a format accepted by the target accelerator.

3. The work scheduler apparatus of one of the previous claims, wherein the combined work descriptor is to refer to a first work request and the first work request is in a format accepted by the target accelerator.

4. The work scheduler apparatus of one of the previous claims, wherein the work scheduler is to enqueue the work request to the egress queue (308) to assign to a next accelerator after completion of the work request.

5. The work scheduler apparatus of one of the previous claims, wherein the scheduler (304) is to:
assign the work request from the ingress queue (302) to the egress queue (308) based on quality of service, QoS, associated with the assigned work request.

6. The work scheduler apparatus of one of the previous claims, wherein after selection of the egress queue (308) by the scheduler (304) and based on the target accelerator sharing virtual memory space with the entity that requested operations, the work scheduler is to receive a pointer to data from the entity that requested operations and perform pointer translation.

7. The work scheduler apparatus of one of the previous claims, wherein the work request comprises a request to process data, decrypt data, encrypt data, store data, transfer data, parse data, copy data, perform an inference using data, or transform data.

8. The work scheduler apparatus of any of claims 1-7, comprising at least two accelerators, an accelerator comprising one or more of: field programmable gate arrays, FPGAs, graphics processor units, GPUs, artificial intelligence, AI, inference engines, image recognition, object detection, speech recognition, memory, storage, central processing units, CPUs, software executed by a hardware device, or network interface.

9. A computer-implemented method comprising:
receiving a combined work descriptor that identifies at least one work descriptor for performance by an accelerator and the combined work descriptor specifies a policy for managing work associated with the combined work descriptor, wherein the combined work descriptor specifies a sequence of software modules and/or hardware devices that are to perform operations on data, wherein the combined work descriptor includes multiple work descriptors that describe respective work items in a sequence of work items, wherein each work descriptor includes a pointer to the next work descriptor;
receiving at an ingress queue (302) a work request generated by the work scheduler based on the combined work descriptor for performance by an accelerator;
storing at an egress queue (308) the work request assigned to a target accelerator;
assiging by a scheduler (304) the work request in the ingress queue (302) to the egress queue (308) based on a priority of the work request, wherein the work request includes a reference to another work request, wherein the priority is defined in a scheduling policy specified in the combined work descriptor; and
providing an identifier of a result data to a requesting entity that requested operations based on the combined work descriptor.

10. The method of claim 9, wherein allocating a work descriptor associated with the combined work descriptor to the egress queue (308) based on the scheduling policy specified by the combined work descriptor comprises assigning a work request from the ingress queue (302) to the egress queue (308) based on quality of service, QoS, associated with the work request.

11. The method of claim 9 or 10, wherein allocating the work descriptor associated with the combined work descriptor to the egress queue (308) based on the scheduling policy specified by the combined work descriptor comprises providing load balancing of work requests in the ingress queue (302) to the accelerator to distribute work requests to different accelerators that perform a function specified in the distributed work requests.

12. The method of any of claims 9-11, wherein the combined work descriptor refers to a first work request, the first work request to include a reference to a second work request to be performed by a target accelerator and comprising translating the first work request to a format accepted by the target accelerator.

13. A system comprising:
a core (106-112);
a memory (104);
the work scheduler apparatus as in any one of claims 1-8;
the accelerator; and
an interconnect (102) to communicatively couple the core (106-112), the memory (104), the work scheduler apparatus, and the accelerator, wherein:
the core (106-112) is to execute an application that is to request performance of a sequence of work based on the combined work descriptor and provide the combined work descriptor to the work scheduler apparatus via the interconnect, wherein the combined work descriptor specifies the sequence of software modules and/or
hardware devices that are to perform the operations on data,
the work scheduler apparatus is to access a work descriptor from the memory (104) based on content of the combined work descriptor and allocate the work descriptor to the ingress queue (302) for execution by the accelerator,
the logic is to determine the egress queue (308) and position in the egress queue (308) for the work descriptor based in part on a configuration,
the ingress queue (302) is to receive another work descriptor after execution by the accelerator, and
the work scheduler apparatus is to indicate that data is available from the sequence of work to the application.

14. The system of claim 13, wherein the combined work descriptor is to refer to a first work request, the first work request to include a reference to a second work request to be performed by the target accelerator, and a command translator of the work scheduler apparatus is to translate a first work request to a format accepted by the target accelerator

15. The system of any of claims 13 or 14, wherein the work request comprises a request to process data, decrypt data, encrypt data, store data, transfer data, parse data, copy data, perform an inference using data, or transform data.

## Patentansprüche

1. Arbeitsplanungsvorrichtung, die Folgendes umfasst:
eine Eingabeschnittstelle (360), um einen kombinierten Arbeitsdeskriptor zu empfangen, wobei der kombinierte Arbeitsdeskriptor mindestens einer Verarbeitungsoperation zugeordnet ist, die mindestens eine Verarbeitungsoperation durch die Arbeitsplanungsvorrichtung gemanagt werden soll, der kombinierte Arbeitsdeskriptor eine Abfolge von Software-Modulen und/oder Hardware-Einrichtungen, die Operationen an Daten durchführen sollen, festlegt, der kombinierte Arbeitsdeskriptor mehrere Arbeitsdeskriptoren, die jeweilige Arbeitselemente in einer Abfolge von Arbeitselementen beschreiben, enthält und jeder Arbeitsdeskriptor einen Zeiger zum nächsten Arbeitsdeskriptor enthält;
eine Eintrittswarteschlange (302), um eine Arbeitsanforderung zu empfangen, die durch die Arbeitsplanungseinrichtung auf der Grundlage des kombinierten Arbeitsdeskriptors erzeugt wurde, zur Durchführung durch einen Beschleuniger;
eine Austrittswarteschlange (308), um die Arbeitsanforderung, die einem Zielbeschleuniger zugewiesen ist, zu speichern;
eine Planungseinrichtung (304), um die Arbeitsanforderung in der Eintrittswarteschlange (302) der Austrittswarteschlange (308) auf der Grundlage einer Priorität der Arbeitsanforderung zuzuweisen, wobei die Arbeitsanforderung einen Bezug zu einer weiteren Arbeitsanforderung enthält und die Priorität in einer Strategie definiert ist, die im kombinierten Arbeitsdeskriptor festgelegt ist; und
eine Logik, um eine Kennung von Ergebnisdaten zu einer anfordernden Einheit, die Operationen angefordert hat, auf der Grundlage des kombinierten Arbeitsdeskriptors, zu liefern.

2. Arbeitsplanungsvorrichtung nach Anspruch 1, wobei der kombinierte Arbeitsdeskriptor ausgelegt ist, auf eine erste Arbeitsanforderung Bezug zu nehmen, die erste Arbeitsanforderung ausgelegt ist, einen Bezug zu einer zweiten Arbeitsanforderung, die durch den Zielbeschleuniger durchgeführt werden soll, zu enthalten und die Arbeitsplanungsvorrichtung eine Übersetzungseinrichtung (310) umfasst, um die erste Arbeitsanforderung zu einem Format zu übersetzen, das durch den Zielbeschleuniger angenommen wird.

3. Arbeitsplanungsvorrichtung nach einem der vorhergehenden Ansprüche, wobei der kombinierte Arbeitsdeskriptor ausgelegt ist, auf eine erste Arbeitsanforderung Bezug zu nehmen, und die erste Arbeitsanforderung in einem Format vorliegt, das durch den Zielbeschleuniger angenommen wird.

4. Arbeitsplanungsvorrichtung nach einem der vorhergehenden Ansprüche, wobei die Arbeitsplanungseinrichtung ausgelegt ist, die Arbeitsanforderung in die Austrittswarteschlange (308) einzureihen, um sie nach Abschluss der Arbeitsanforderung einem nächsten Beschleuniger zuzuweisen.

5. Arbeitsplanungsvorrichtung nach einem der vorhergehenden Ansprüche, wobei die Planungseinrichtung (304) ausgelegt ist zum:
Zuweisen der Arbeitsanforderung aus der Eintrittswarteschlange (302) zur Austrittswarteschlange (308) auf der Grundlage einer Dienstqualität, QoS, die der zugewiesenen Arbeitsanforderung zugeordnet ist.

6. Arbeitsplanungsvorrichtung nach einem der vorhergehenden Ansprüche, wobei die Arbeitsplanungseinrichtung ausgelegt ist, nach Auswahl der Austrittswarteschlange (308) durch die Planungseinrichtung (304) und auf der Grundlage davon, dass der Zielbeschleuniger virtuellen Arbeitsspeicherraum mit der Einheit, die Operationen angefordert hat, gemeinsam verwendet, von der Einheit, die Operationen angefordert hat, einen Zeiger zu Daten zu empfangen und eine Zeigerübersetzung durchzuführen.

7. Arbeitsplanungsvorrichtung nach einem der vorhergehenden Ansprüche, wobei die Arbeitsanforderung eine Anforderung, Daten zu verarbeiten, Daten zu entschlüsseln, Daten zu verschlüsseln, Daten zu speichern, Daten zu übertragen, Daten zu parsen, Daten zu kopieren, eine Schlussfolgerung unter Verwendung von Daten durchzuführen, oder Daten zu transformieren, umfasst.

8. Arbeitsplanungsvorrichtung nach einem der Ansprüche 1-7, die mindestens zwei Beschleuniger umfasst, wobei ein Beschleuniger Folgendes umfasst: feldprogrammierbare Gate-Arrays und/oder FPGAs und/oder Grafikprozessoreinheiten und/oder GPUs und/oder künstliche Intelligenz und/oder AI und/oder Schlussfolgerungsmaschinen und/oder Bilderkennung und/oder Objektdetektion und/oder Spracherkennung und/oder Arbeitsspeicher und/oder Speicher und/oder Zentraleinheiten und/oder CPUs und/oder Software, die durch eine Hardware-Einrichtung ausgeführt wird, und/oder eine Netzschnittstelle.

9. Computerimplementiertes Verfahren, das Folgendes umfasst:
Empfangen eines kombinierten Arbeitsdeskriptors, der mindestens einen Arbeitsdeskriptor zur Durchführung durch einen Beschleuniger identifiziert, wobei der kombinierte Arbeitsdeskriptor eine Strategie zum Managen von Arbeit, die dem kombinierten Arbeitsdeskriptor zugeordnet ist, festlegt, der kombinierte Arbeitsdeskriptor eine Abfolge von Software-Modulen und/oder Hardware-Einrichtungen, die ausgelegt sind, Operationen an Daten durchzuführen, festlegt, der kombinierte Arbeitsdeskriptor mehrere Arbeitsdeskriptoren, die jeweilige Arbeitselemente in einer Abfolge von Arbeitselementen beschreiben, enthält und jeder Arbeitsdeskriptor einen Zeiger zum nächsten Arbeitsdeskriptor enthält;
Empfangen in einer Eintrittswarteschlange (302) einer Arbeitsanforderung, die durch die Arbeitsplanungseinrichtung auf der Grundlage des kombinierten Arbeitsdeskriptors erzeugt wurde, zur Durchführung durch einen Beschleuniger;
Speichern in einer Austrittswarteschlange (308) der Arbeitsanforderung, die einem Zielbeschleuniger zugewiesen ist;
Zuweisen durch eine Planungseinrichtung (304) der Arbeitsanforderung in der Eintrittswarteschlange (302) zur Austrittswarteschlange (308) auf der Grundlage einer Priorität der Arbeitsanforderung, wobei die Arbeitsanforderung einen Bezug zu einer weiteren Arbeitsanforderung enthält und die Priorität in einer Planungsstrategie definiert ist, die im kombinierten Arbeitsdeskriptor festgelegt ist; und
Liefern einer Kennung von Ergebnisdaten zu einer anfordernden Einheit, die Operationen angefordert hat, auf der Grundlage des kombinierten Arbeitsdeskriptors.

10. Verfahren nach Anspruch 9, wobei das Zuweisen eines Arbeitsdeskriptors, der dem kombinierten Arbeitsdeskriptor zugeordnet ist, zur Austrittswarteschlange (308) auf der Grundlage der Planungsstrategie, die durch den kombinierten Arbeitsdeskriptor festgelegt ist, ein Zuweisen einer Arbeitsanforderung aus der Eintrittswarteschlange (302) zur Austrittswarteschlange (308) auf der Grundlage einer Dienstqualität, QoS, die der Arbeitsanforderung zugeordnet ist, umfasst.

11. Verfahren nach Anspruch 9 oder 10, wobei das Zuweisen des Arbeitsdeskriptors, der dem kombinierten Arbeitsdeskriptor zugeordnet ist, zur Austrittswarteschlange (308) auf der Grundlage der Planungsstrategie, die durch den kombinierten Arbeitsdeskriptor festgelegt ist, ein Liefern eines Lastausgleichs von Arbeitsanforderungen in der Eintrittswarteschlange (302) zum Beschleuniger umfasst, um Arbeitsanforderungen zu verschiedenen Beschleunigern zu verteilen, die eine Funktion durchführen, die in den verteilten Arbeitsanforderungen festgelegt ist.

12. Verfahren nach einem der Ansprüche 9-11, wobei der kombinierte Arbeitsdeskriptor sich auf eine erste Arbeitsanforderung bezieht, die erste Arbeitsanforderung ausgelegt ist, einen Bezug zu einer zweiten Arbeitsanforderung, die durch einen Zielbeschleuniger durchgeführt werden soll, zu enthalten, und ein Übersetzen der ersten Arbeitsanforderung zu einem Format umfasst, das durch den Zielbeschleuniger angenommen wird.

13. System, das Folgendes umfasst:
einen Kern (106-112);
einen Arbeitsspeicher (104);
die Arbeitsplanungsvorrichtung nach einem der Ansprüche 1-8;
den Beschleuniger und
eine Verbindung (102), um den Kern (106-112), den Arbeitsspeicher (104), die Arbeitsplanungsvorrichtung und den Beschleuniger kommunikationstechnisch zu koppeln, wobei
der Kern (106-112) ausgelegt ist, eine Anwendung auszuführen, die ausgelegt ist, eine Durchführung einer Arbeitsabfolge auf der Grundlage des kombinierten Arbeitsdeskriptors anzufordern und den kombinierten Arbeitsdeskriptor mittels der Verbindung zur Arbeitsplanungsvorrichtung zu liefern, wobei der kombinierte Arbeitsdeskriptor die Abfolge von Software-Modulen und/oder Hardware-Einrichtungen festlegt, die ausgelegt sind, die Operationen an Daten durchzuführen,
die Arbeitsplanungsvorrichtung ausgelegt ist, auf der Grundlage eines Inhalts des kombinierten Arbeitsdeskriptors auf einen Arbeitsdeskriptor aus dem Arbeitsspeicher (104) zuzugreifen und den Arbeitsdeskriptor der Eintrittswarteschlange (302) zur Ausführung durch den Beschleuniger zuweisen,
die Logik ausgelegt ist, die Austrittswarteschlange (308) und eine Position in der Austrittswarteschlange (308) für den Arbeitsdeskriptor teilweise auf der Grundlage einer Konfiguration zu bestimmen,
die Eintrittswarteschlange (302) ausgelegt ist, einen weiteren Arbeitsdeskriptor nach Ausführung durch den Beschleuniger zu empfangen, und
die Arbeitsplanungsvorrichtung ausgelegt ist, der Anwendung anzuzeigen, dass Daten aus der Arbeitsabfolge verfügbar sind.

14. System nach Anspruch 13, wobei der kombinierte Arbeitsdeskriptor ausgelegt ist, auf eine erste Arbeitsanforderung Bezug zu nehmen, die erste Arbeitsanforderung ausgelegt ist, einen Bezug zu einer zweiten Arbeitsanforderung, die durch den Zielbeschleuniger durchgeführt werden soll, zu enthalten, und eine Anweisungsübersetzungseinrichtung der Arbeitsplanungsvorrichtung ausgelegt ist, eine erste Arbeitsanforderung zu einem Format zu übersetzen, das durch den Zielbeschleuniger angenommen wird.

15. System nach einem der Ansprüche 13 oder 14, wobei die Arbeitsanforderung eine Anforderung, Daten zu verarbeiten, Daten zu entschlüsseln, Daten zu verschlüsseln, Daten zu speichern, Daten zu übertragen, Daten zu parsen, Daten zu kopieren, eine Schlussfolgerung unter Verwendung von Daten durchzuführen, oder Daten zu transformieren, umfasst.

## Revendications

1. Appareil d'ordonnancement de travail comprenant :
une interface d'entrée (360) pour recevoir un descripteur de travail combiné, le descripteur de travail combiné étant associé à au moins une opération de traitement, l'au moins une opération de traitement étant destinée à être gérée par l'appareil d'ordonnancement de travail, dans lequel le descripteur de travail combiné spécifie une séquence de modules logiciels et/ou de dispositifs matériels devant réaliser des opérations sur des données, dans lequel le descripteur de travail combiné comporte de multiples descripteurs de travail qui décrivent des éléments de travail respectifs dans une séquence d'éléments de travail, dans lequel chaque descripteur de travail comporte un pointeur vers le descripteur de travail suivant ;
une file d'attente d'entrée (302) pour recevoir une demande de travail générée par l'ordonnanceur de travail basée sur le descripteur de travail combiné en vue de sa réalisation par un accélérateur ;
une file d'attente de sortie (308) pour stocker la demande de travail assignée à un accélérateur cible ;
un ordonnanceur (304) pour assigner la demande de travail se trouvant dans la file d'attente d'entrée (302) à la file d'attente de sortie (308) en fonction d'une priorité de la demande de travail, dans lequel la demande de travail comporte une référence à une autre demande de travail, dans lequel la priorité est définie dans une politique spécifiée dans le descripteur de travail combiné ; et
une logique pour fournir un identifiant de données de résultat à une entité requérante qui a demandé des opérations en fonction du descripteur de travail combiné.

2. Dispositif d'ordonnancement de travail selon la revendication 1, dans lequel le descripteur de travail combiné est destiné à se référer à une première demande de travail, la première demande de travail incluant une référence à une deuxième demande de travail devant être réalisée par l'accélérateur cible, et l'appareil d'ordonnancement de travail comprenant un traducteur (310) pour traduire la première demande de travail dans un format accepté par l'accélérateur cible.

3. Dispositif d'ordonnancement de travail selon l'une des revendications précédentes, dans lequel le descripteur de travail combiné est destiné à faire référence à une première demande de travail et la première demande de travail est dans un format accepté par l'accélérateur cible.

4. Dispositif d'ordonnancement de travail selon l'une des revendications précédentes, dans lequel l'ordonnanceur de travail est destiné à mettre en file d'attente la demande de travail dans la file d'attente de sortie (308) pour l'assigner à un accélérateur suivant au terme de la demande de travail.

5. Dispositif d'ordonnancement de travail selon l'une des revendications précédentes, dans lequel l'ordonnanceur (304) est destiné à :
assigner la demande de travail provenant de la file d'attente d'entrée (302) à la file d'attente de sortie (308) en fonction d'une qualité de service, QoS, associée à la demande de travail assignée.

6. Dispositif d'ordonnancement de travail selon l'une des revendications précédentes, dans lequel, après sélection de la file d'attente de sortie (308) par l'ordonnanceur (304) et lorsque l'accélérateur cible partage un espace mémoire virtuel avec l'entité qui a demandé des opérations, l'ordonnanceur de travail est destiné à recevoir un pointeur vers des données en provenance de l'entité qui a demandé des opérations et à réaliser une traduction de pointeur.

7. Dispositif d'ordonnancement de travail selon l'une des revendications précédentes, dans lequel la demande de travail comprend une demande de traitement de données, de décryptage de données, de cryptage de données, de stockage de données, de transfert de données, d'analyse syntaxique de données, de copie de données, de réalisation d'une inférence à l'aide de données ou de transformation de données.

8. Dispositif d'ordonnancement de travail selon l'une quelconque des revendications 1 à 7, comprenant au moins deux accélérateurs, un accélérateur comprenant un ou plusieurs : réseaux prédiffusés programmables par l'utilisateur, FPGA, processeurs graphiques, GPU, intelligence artificielle, AI, moteurs d'inférence, unités de reconnaissance d'images, de détection d'objets, de reconnaissance vocale, de mémoire, de stockage, unités centrales de traitement, CPU, logiciels exécutés par un dispositif matériel, ou interface réseau.

9. Procédé implémenté par ordinateur comprenant :
la réception d'un descripteur de travail combiné qui identifie au moins un descripteur de travail pour sa réalisation par un accélérateur et le descripteur de travail combiné spécifie une politique de gestion du travail associé au descripteur de travail combiné, dans lequel le descripteur de travail combiné spécifie une séquence de modules logiciels et/ou de dispositifs matériels destinés à réaliser des opérations sur les données, dans lequel le descripteur de travail combiné comporte de multiples descripteurs de travail qui décrivent des éléments de travail respectifs dans une séquence d'éléments de travail, dans lequel chaque descripteur de travail pointe vers le descripteur de travail suivant ;
la réception au niveau d'une file d'attente d'entrée (302) d'une demande de travail générée par l'ordonnanceur de travail basée sur le descripteur de travail combiné en vue de sa réalisation par un accélérateur ;
le stockage au niveau d'une file d'attente de sortie (308) de la demande de travail assignée à un accélérateur cible ;
l'assignation par un ordonnanceur (304) de la demande de travail se trouvant dans la file d'attente d'entrée (302) à la file d'attente de sortie (308) en fonction d'une priorité de la demande de travail, dans lequel la demande de travail comporte une référence à une autre demande de travail, dans lequel la priorité est définie dans une politique d'ordonnancement spécifiée dans le descripteur de travail combiné ; et
la fourniture d'un identifiant de données de résultat à une entité requérante qui a demandé des opérations basées sur le descripteur de travail combiné.

10. Procédé selon la revendication 9, dans lequel l'assignation d'un descripteur de travail associé au descripteur de travail combiné à la file d'attente de sortie (308) en fonction de la politique d'ordonnancement spécifiée par le descripteur de travail combiné comprend l'assignation d'une demande de travail de la file d'attente d'entrée (302) à la file d'attente de sortie (308) en fonction d'une qualité de service, QoS, associée à la demande de travail.

11. Procédé selon la revendication 9 ou 10, dans lequel l'assignation du descripteur de travail associé au descripteur de travail combiné à la file d'attente de sortie (308) en fonction de la politique d'ordonnancement spécifiée par le descripteur de travail combiné comprend la fourniture d'un équilibrage de charge de demandes de travail dans la file d'attente d'entrée (302) à l'accélérateur pour distribuer des demandes de travail à différents accélérateurs qui réalisent une fonction spécifiée dans les demandes de travail distribuées.

12. Procédé selon l'une quelconque des revendications 9 à 11, dans lequel le descripteur de travail combiné se réfère à une première demande de travail, la première demande de travail comportant une référence à une deuxième demande de travail devant être exécutée par un accélérateur cible et comprenant la traduction de la première demande de travail dans un format accepté par l'accélérateur cible.

13. Système comprenant :
un coeur (106-112) ;
une mémoire (104) ;
l'appareil d'ordonnancement de travail selon l'une quelconque des revendications 1 à 8 ;
l'accélérateur ; et
une interconnexion (102) pour coupler de manière communicative le coeur (106-112), la mémoire (104), l'appareil d'ordonnancement de travail et l'accélérateur, dans lequel :
le coeur (106-112) est destiné à exécuter une application demandant la réalisation d'une séquence de travail basée sur le descripteur de travail combiné et à fournir le descripteur de travail combiné à l'appareil d'ordonnancement du travail via l'interconnexion, dans lequel le descripteur de travail combiné spécifie la séquence de modules logiciels et/ou de dispositifs matériels devant réaliser les opérations sur les données,
l'appareil d'ordonnancement de travail est destiné à accéder à un descripteur de travail à partir de la mémoire (104) en fonction du contenu du descripteur de travail combiné et à assigner le descripteur de travail à la file d'attente d'entrée (302) pour son exécution par l'accélérateur,
la logique est destinée à déterminer la file d'attente de sortie (308) et la position dans la file d'attente de sortie (308) pour le descripteur de travail en fonction en partie d'une configuration,
la file d'attente d'entrée (302) est destinée à recevoir un autre descripteur de travail après l'exécution par l'accélérateur, et
l'appareil d'ordonnancement de travail est destiné à indiquer que des données sont à la disposition de l'application à partir de la séquence de travail.

14. Système selon la revendication 13, dans lequel le descripteur de travail combiné doit se référer à une première demande de travail, la première demande de travail doit inclure une référence à une deuxième demande de travail devant être exécutée par l'accélérateur cible et à un traducteur de commandes de l'appareil d'ordonnancement de travail devant traduire une première demande de travail dans un format accepté par l'accélérateur cible.

15. Système selon l'une quelconque des revendications 13 ou 14, dans lequel la demande de travail comprend une demande de traitement de données, de décryptage de données, de cryptage de données, de stockage de données, de transfert de données, d'analyse de données, de copie de données, d'exécution d'une inférence à l'aide de données ou de transformation de données.
